# EUROPÄISCHE PATENTSCHRIFT

(11) **EP 3 607 382 B1**
(45) Veröffentlichungstag und Bekanntmachung des Hinweises auf die Patenterteilung: **30.07.2025**
(21) Anmeldenummer: 18716096.5
(22) Anmeldetag: 29.03.2018
(51) Int. Cl.: G02B 27/01, G02B 6/35, G03H 1/22, G02B 6/06, G02B 26/08, G03H 1/00, G02B 6/028

(54) **AUGMENTED-REALITY(AR)-BRILLE UND VERFAHREN ZUR EINMISCHUNG VIRTUELLER BILDER IN EIN DURCH MINDESTENS EIN BRILLENGLAS FÜR EINEN TRÄGER DER BRILLE SICHTBARES BILD**
AUGMENTED REALITY (AR) GLASSES AND METHOD FOR MIXING VIRTUAL IMAGES INTO AN IMAGE VISIBLE TO A WEARER OF THE GLASSES THROUGH AT LEAST ONE GLASSES LENS
LUNETTES À RÉALITÉ AUGMENTÉE (RA) ET PROCÉDÉ POUR INTÉGRER DES IMAGES VIRTUELLES DANS UNE IMAGE VISIBLE GRÂCE À AU MOINS UN VERRE DE LUNETTES POUR UN PORTEUR DES LUNETTES

(30) Priorität: 06.04.2017 DE 102017003336
(43) Veröffentlichungstag der Anmeldung: 12.02.2020
(73) Patentinhaber: Roggatz, Konstantin, 25560 Puls (DE)
(72) Erfinder: Roggatz, Konstantin, 25560 Puls (DE)
(74) Vertreter: Weidner Stern Jeschke
(86) Internationale Anmeldenummer: PCT/EP2018/000140
(87) Internationale Veröffentlichungsnummer: WO 2018/184718

(56) Entgegenhaltungen:
- US-A1- 2011 227 487
- US-A1- 2014 003 762
- US-A1- 2015 015 879

## Beschreibung

### [1] Anwendungsgebiet

Die Erfindung betrifft eine AR-(Augmented Reality)-Brille, die wie eine normale Brille durchsichtig ist, jedoch in das durch die Brillengläser sichtbare reale Bild virtuelle Objekte oder Bilder hoch aufgelöst zusätzlich einblenden kann. Im Speziellen betrifft die Erfindung eine AR-Brille, die durch die Platzierung eine Vielzahl von Glasfaserenden direkt vor der Pupille des Brillenträgers ein auflösungsdynamisches Lichtfeld in die Pupille projiziert, wobei die Glasfaserzuleitungen durch eine optische Tarnvorrichtung von außen unsichtbar durch das Glas geführt werden und durch optische Weichen verteilt werden können, und wobei hinter dem Ohr oder Kopf des Brillenträgers SLM-Prozessoren, Transmissions-Matrix umgeformte Bilder die Glasfasern eingekoppelt werden, damit die Glasfaserenden vor der Pupille ein perfektes Teilbild ausstrahlen.

### [2]Stand der Technik

Es sind verschiedenen System bekannt, wie eine AR-Brille funktionell aufgebaut ist. Dabei unterscheidet man grob den älteren Ansatz des Rückspiegelns eines kleinen Displays durch das Brillenglas oder in einem Prisma. Dieser Ansatz macht den Rahmen für dieses Display übermäßig groß oder den sichtbaren Ausschnitt recht klein, und wird hier nicht weiter behandelt (z.B. Google Glas oder Meta 2).

Ein weiterer neuerer Ansatz ist das Nutzen von flachen Wellenleitern (Waveguides), die das Bild durch Beugungsgitter aus einer Scheibe austreten lassen. Diese Technik bietet jedoch nur einen sehr eingeschränkten Betrachtungswinkel und schlechte Durchsicht (z.B. Hololens oder Magic Leap). Einige neuere, noch nicht realisierte Ansätze erzeugen ein Lichtfeld von mehreren rasterförmig angeordneten Teilausschnitten des Gesamtbildes. Diese Teilbilder werden (wie bei einigen patentierten Ansätzen von Magic Leap) durch ein Raster von schnell schaltenden Spiegelprismen (optical gates) oder durch Beugungsgitter (Waveguide with embedded diffraction grating) von der Seite ins Brillenglas und dann ins Auge projiziert. Auch wurde von Magic Leap vorgeschlagen, eine Oszillierende Monomode-Glasfaser als besonders kleiner Bild-Projektor zu nutzen.

Ein anderes System (Pinlight Display vom UNC) lenkt mit einem SLM (Spatial Light Modulator) eine Wellenfront auf ein Raster von angerauten Punkten auf dem Brillenglas. Die angerauten Punkte wirken dann bei naher Betrachtung wie die Leinwand eines Lichtfeld-Ausschnittes, werden jedoch von außen beleuchtet.

Es sind 3D Monitore bekannt, die mit Hilfe von Augentracking dem Betrachter ein Computer generiertes Hologramm in die Augenrichtung projizieren. Dabei werden ebenfalls mit SLMs Teilhologramme erzeugt, die sich dann zu einem Gesamthologramm integrieren.

Die US 2014/003762 A1, die als nächstkommender Stand der Technik angesehen wird, offenbart eine Optikvorrichtung, die eine zweidimensionale Wellenleiter-Anordnung aus mehreren, in Reihen und Spalten angeordnete Wellenleitern umfasst und in einer Augmented Reality-Brille eingesetzt werden kann. Die 2D-Wellenleiter-Anordnung kann entweder in Reihe oder parallel angesteuert werden, wobei im letzteren Fall mehrere Multimode-Glasfasern vorgesehen sind, die eine RGB-Lichtquelle oder einen Intensitätsmodulator mit der Wellenleiter-Anordnung verbinden. 2D-Bilder können mit einem Scanning-Projektorsystem oder durch Koppeln eines 2D-Mikroprojektors mit einer Lochblende winkelcodiert werden.

Die US 2015/015879 A1 offenbart die Erzeugung eines Bildes aus einer Pixel-Matrix mit Hilfe eines einzelnen Glasfaser-Projektors mit einer Multimode-Glasfaser, schlägt jedoch weder die Herstellung eines Integralbildes aus einem Raster von neben- und übereinander angeordneten Einzelprojektionen noch eine Verwendung in einer Augmented Reality-Brille vor.

Die US 2011/227487 A1 offenbart eine Anzeigevorrichtung, in der Licht über einen flächigen Wellenleiter transportiert und dann pixelweise aus dem Wellenleiter ausgekoppelt wird, jedoch am Eintrittsende des Wellenleiters keine Lichtmodulation stattfindet.

### [3]Nachteile des Standes der Technik

Die bis jetzt vorgestellten Entwürfe sind weit davon entfernt, wie eine handelsübliche Brille mit kleinstmöglichen Rahmen auszusehen. Die Markterfahrungen von Google-Glas bestätigen jedoch klar, dass selbst die kleinste Anomalie zur normalen Brille ein Problem mit der Markt-Akzeptanz bedeutet, wenn die Brille täglich genutzt werden soll. Der individuelle Gesichtsausdruck und Augenkontakt ist meist sozial zu sensibel, als dass er durch futuristische Technik entstellt werden kann. Außerdem sind die Brillen schlecht pixelaufgelöst, eingeschränkt durchsichtig, sie fokussieren nicht wie reale Objekte, bieten nur ein eingeschränktes Sichtfeld und leuchten viel Licht in die Augen.

### [4] Vorteile und Aufgabe der Erfindung

Die Vorteile und Aufgaben der Erfindung sind es, eine höchst minimalistische rahmenlose Brille (1) mit direkt an den Gläsern befestigten Nasensteg und Seitenbügel als Vorbild zu nehmen und in ihr ein fast unsichtbares optisches System zu integrieren (10), welches ein von außen nicht sichtbares höchst aufgelöstes integrales Lichtfeld in die Augen projiziert (mindestens 20K) (48). Die Ausdehnung des Lichtfeldes ist dabei lediglich durch das Blickfeld der Gläser eingeschränkt, so dass bei entsprechendem Brillendesign auch ein Blickfeld von 220 Grad möglich ist. Die Gläser bringen eine LCD Verdunklungsschicht vorne auf. Außerdem sind mindestens 2 Videokameras auf die Augen und 2 Videokameras ins Blickfeld untergebracht (53).

Die Gläser können auch als normale Optiker-Gläser ausgeführt werden.

Jegliche Technik, die etwas größer aufträgt, kann in einer tragbaren Einheit (3) oder am Ende des Ohrbügels hinter dem Ohr und dem Kopf untergebracht werden.

Das Bild des Projizierten Lichtfeldes kann wenn nötig für jedes betrachtete Objekt den angepassten Focus liefern, um die Augen-Vergenz-Focus-Beziehung nachzubilden, und dabei die fokussierten Objekte in höchstmöglicher Retina-Auflösung (47) abbilden, ohne den Kopf drehen zu müssen. Das Patent zeigt, dass der Bau einer "Main Stream" AR-Brille absolut möglich ist. Dies bedingt jedoch auch den Paradigma-Wechsel hin zu "Open Source" Betriebssystemen, die den AR-Datenschutz-Albträumen mit den BlockChain-Konstruktionen des absoluten Vertrauens begegnen, und die AR-Brille zur ultimativen ultimativen BlockChain-Anwendung machen.

Die Erfindung wird durch die Ansprüche definiert.

### [5]Recherche-Stichwörter

Pinhole Projector, Integral Imaging, Optical Cloaking Device, Multi Mode Fiber Endoscope, Computer Generated Holography CGH, Foveated Rendering, Vergence Accommodation Conflict, Time Domain Imaging, Amplitude and Phase Complex Modulating SLM, Magic Leap, Hololens, SLM, DMD, DLP, FLCOS, Augmented Reality AR, Mixed Reality MR, Matrix Optics, Specles Reduction, Piezo FTIR, Electochromic Mirror, Raster-Brille,

### [6]Skizzen Auflistung

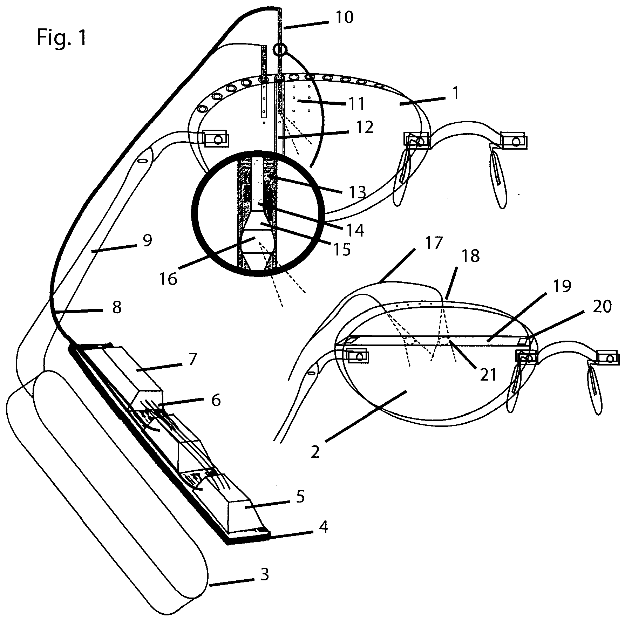

Im Folgenden wird die Erfindung anhand von mehreren, in der Zeichnung dargestellten Ausführungsformen näher erläutert. Es zeigen
Fig. 1 AR Brille Übersicht mit MicroElectroMechanical Systems (MEMS)-Technik oder Schaltspiegel

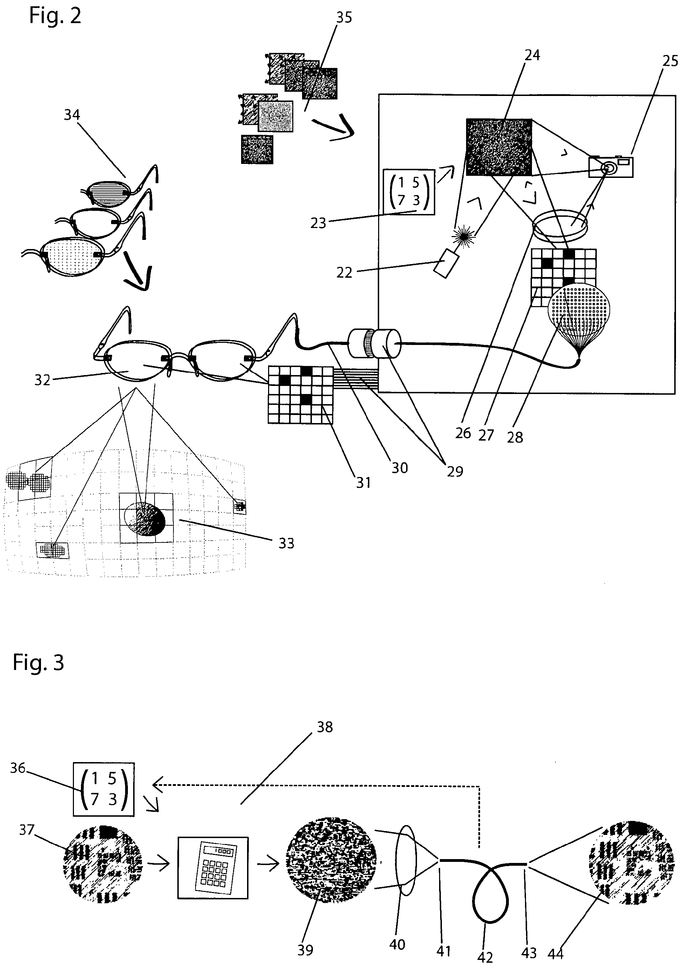

Fig. 2 Konzeptdarstellung Gesamtsystem
Fig. 3 Konzeptdarstellung Multimode Glasfaser Projektor

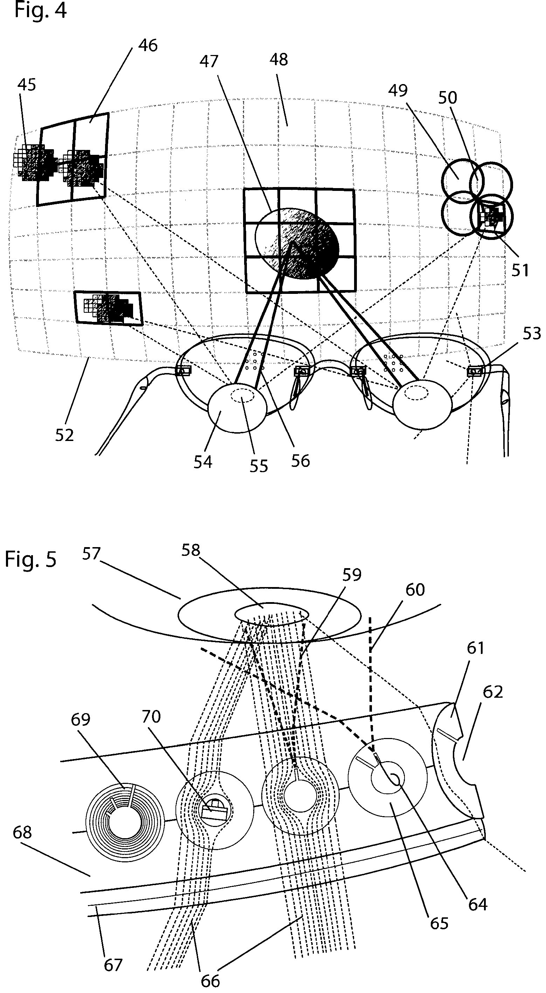

Fig. 4 AR-Brille Auflösungsdynamisches Integralbild
Fig. 5 Gradienten-Optik Tarnkanäle im Brillenglas

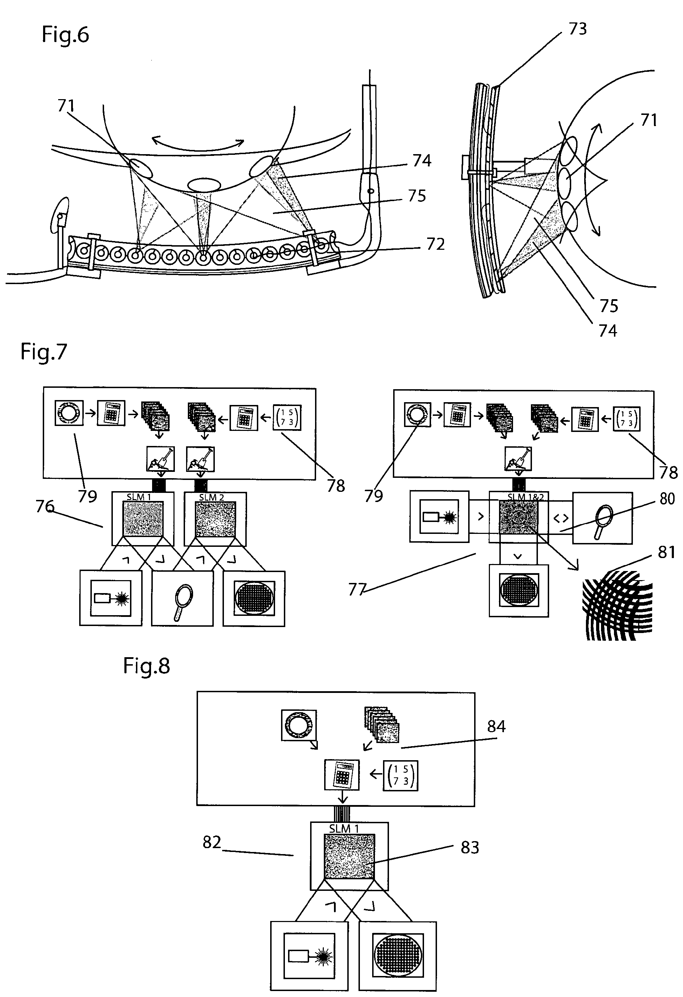

Fig. 6 Projektionsebenen für Focus und Ambiente im Brillenglas
Fig. 7 Konzeptdarstellung Zweistufen-Projektor
Fig. 8 Konzeptdarstellung Einstufen-Projektor

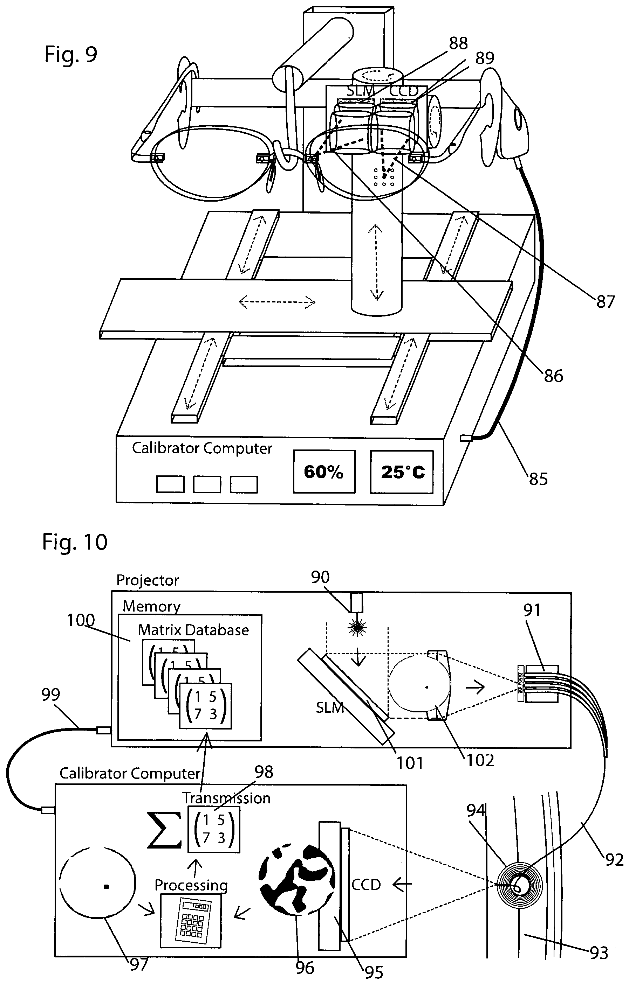

Fig. 9 AR-Brillen Kalibrierungs-Automat
Fig. 10 Konzeptdarstellung Transmissionsmuster-Messung

### [7]Ausführliche Beschreibung

Wie in der Zeichnung dargestellt, werden für die AR-Brille in einem am Hinterkopf platzierten aus mehreren SLM-Lichtprozessoren bestehenden Hologramm-Projektor (3) mindestens 300 Glasfaser Projektionspunkte (48) mit jeweils einem niedriger aufgelöstem Teilbild (51) gespeist. Die Zuleitungs-Glasfasern werden durch den Brillenbügel (9) und den Brillenrand (62) nach Belieben zur Projektion an der Brille positioniert. Dadurch ergeben sich verschiedene Ansätze (34), wie die Projektionen direkt in einem Raster vor das Auge gelangen können, um so eine Vielzahl von Teilbildern oder Hologramme (33) direkt in die Pupillen zu projizieren. Die Strich-Variante (2) platziert die Projektionspunkte am Brillenrand, und nutzt schnell schaltbare Spiegelflächen (19) innerhalb des Glases. Der bevorzugte hier beschriebene Punkt-Variante (1) nutzt eine Gradienten-Tarnoptik (12,69). Die Glasfasern im Brillenglas werden dafür durch ein optisches Tarnröhrchen geleitet (12), so dass die Fasern, oder an ihnen befestigte abschließende MEMS-Weichen Systeme (10,70) im Glas von allen Seiten unsichtbar sind (66). Die Lichtleiter können so in einem Raster direkt vor den Augen im Glas ins Auge Projizieren (59).

Aus der Sicht des Brillenträgers schmelzen die Einzelprojektionen zu einem sichtfeldausfüllenden hoch aufgelösten Gesamtbild (48) zusammen. Der 3D Eindruck entsteht schon durch die stereoskopische Trennung der Projektoren durch rechtes und linkes Glas. Dennoch kann pro Auge ein holografisches Bild geliefert werden, auf das sich das Auge übergangslos von fern bis ganz nahe fokussieren kann. Erst so wird im Zusammenspiel mit der dynamischen Berechnung der 3D-Bilder entsprechend den Kopfbewegungen (Gyrosensoren) , und der Einblendung der entsprechenden Verdunklungs-LCD-Maske (31,67), ein perfektes holografisches Bild in die Realität reingemischt. Durch die sehr kleinen Glasfaser-Projektionspunkte (43) liefern sie sogar ein Bild mit besonders hoher Schärfentiefe, so dass der Projektor nur bei ganz nahen Objekten den Fokus einstellen muss. Auch ist das Brillenglas dadurch in keiner Weise durch Optiken undurchsichtiger als eine normale Brille (66). In umgekehrter Weise werden einige Fasern auch parallel oder exklusiv als Kamera verwendet (25,53). Für jede Glasfaser transformiert ein Rechner oder Computer den Bildausschnitt um die individuelle Transmissionsmatrix (23,36), die zuvor bei der Kalibrierung (87) für jede Faser (92) und jeden Punkt (102) gemessen wurde. Ein SLM (Spatial Light Modulator) (24) erzeugt daraus eine Lichtfront (39), die nicht nur die genaue Lichtstärkenverteilung, sondern auch die Phasenverschiebungs-Verteilung in die Glasfaser einkoppelt (41). Nur durch diese Lichtfront-Umwandlung inklusive Phasenverteilung kann eine einzelne Multimode-Glasfaser (42) für jeweils eine Grundfarbe als Lichtkanal und Projektor benutzt werden (44). Zur Projektion der Bilder werden verschiedene Verfahren beschrieben, die nur einen SLM (83), oder mehrere SLMs (76,77) hintereinander nutzen, um Berechnungsaufwand (78,79) einzusparen. Ein Verfahren setzt konsequent auf Computer generierte Hologramme sowie effektiver holografischer Graustufen Erzeugung (der Holo-Projektor). Ein zweites Verfahren setzt konsequent auf die rechnerische Anwendung der verschiedenen Matrizen für Transmission und Fokussierung (Matrix-Projektor), und benötigt dafür besonders optimierte SLMs mit besonderer Beleuchtung um die Phasenverschiebungen zu generieren. AR-Anwendungen bilden typischerweise nur wenige Objekte innerhalb des weiten Blickfeldes ab (46). Der Projektor steuert dynamisch nur die Glasfaserprojektoren an, in denen auch Objekte liegen. Durch Augenverfolgung (Eye Tracking)(53) werden zusätzlich nur die gerade fokussierten Projektoren (47) in höherer Auflösung angesprochen. Es werden also die meisten Projektionspunkte nur mit einer niedrigen Auflösung (45) beschickt, weil die menschliche Sichtweise die Umgebung sowieso nicht hoch aufgelöst wahrnimmt. Es werden wegen den starken Augapfel-Bewegungen (71) mindesten zwei parallele integrale Abbildungsraster-Ebenen für Fokus- und Ambiente-Projektionen eingesetzt, die durch verschiedene Projektionswinke (74,75) verschiedene Pixeldichten ermöglichen, und genau auf die Pupille beschnitten werden, um kein störendes Augenleuchten zu bekommen. Erst durch diese massive Auflösungs- und Arbeitsreduzierung, und dem massiven Einsatz vorberechneter modularer Beugungsmuster oder Bildmuster ist es möglich mit den schnellsten SLM-Lichtprozessoren und parallelen Grafikprozessoren den Abbildungs-Prozess schon heute zu realisieren. Durch eine ganze Reihe von Verfahren, vor allem durch leicht inkohärentes Laserlicht bei der Projektion, wird der störende Speckle-Effekt ausgefiltert.

Es werden durch MEMS-Glasfaserweichen (10) in den Tarnröhrchen die Anzahl der Glasfaser Stränge (8) reduziert, wodurch die Dicke und die Auflösung der Glasfasern gesteigert werden. Es werden technische Optimierungen an den SLM-Chips vorgenommen, die für die AR-Brille eine optimalere Hologramm oder Matrixprojektion ermöglicht. Durch die Beleuchtung der SLM-Chips durch mehrere verschiedene Lichtquellen, oder ganzer Beleuchtungshologramme, und durch in mehrere Richtungen kippbare DMD-Spiegel, lassen sich die Projektionen für den einzelnen Einkoppelpunkt stark optimieren. Es lassen sich so Graustufen innerhalb eines einzelnen Abbildungs-Zyklus für die extrem schnellen SLM Lichtprozessoren erzeugen. Die 24.000 bis 32.000 Zyklen pro Sekunden der DMD-Chips, können dann für jede Einzelprojektion des integralen Lichtfeldes pro Auge (z.B. 150), und für jede RGB-Farbkomponente und mit einer Bildrate von 60 Hz das komplette Bild zeitlich hintereinander aufbauen. In der Praxis wird für normale AR-Anwendungen jedoch nur ein viel kleinerer Bildbereich genutzt.

Zu näheren Einzelheiten und Varianten der Technologie, verweisen wir auf die Deutsche Patentanmeldung Nr. 10 2017 003 336.6, deren Inhalt durch Bezugnahme in die vorliegende Patentanmeldung aufgenommen wird.

### [8]PV Punktvariante (11)

Diese Variante hat ihren Namen in Anlehnung an die winzigen Glasfaserspitzen, die gerade soweit aus der optischen Tarnung rausragen, dass sie eigentlich nur einen vagen Schatten zeigen. Wird die Glasfaserspitze ganz in den Tarnbereich gerückt, ist gar nichts mehr zu sehen. Das Reizvolle an dieser Variante ist der als magisch wahrgenommene Effekt, dass das Bild regelrecht aus dem Nichts im Glas erscheint. Technisch ist diese Variante besonders reizvoll, weil sie die angebotenen Möglichkeiten und Freiheitsgrade voll ausnutzen kann. **Tarnkappen-Effekt:** Technische Grundlage ist hier der Tarnkappen-Effekt (66), der es erlaubt in einem dichten optischen Medium (68) einen dünnen Hohlraum (64) optisch unsichtbar zu machen. Dies wird durch ringförmig stark abfallende Brechungsindex-Schichten (69) rund um den Hohlraum erreicht, wobei das umgebende optische Medium von einem recht hohen Brechungsindex (mindestens 1,7) ausgehen muss, und die letzte Schicht am getarnten Bereich nur noch einen minimalen Brechungsindex (maximal 1,5) aufweist. Die Lichtstrahlen werden dabei perfekt um den Hohlraum geleitet (66). Weil der Mensch das Licht stets als gradlinig interpretiert, wird der Hohlraum nicht wahrgenommen.

Ein perfekter Tarnkörper ist ein entsprechendes Röhrchen (12), jedoch werden auch komplexere Räume wie ein Oval von allen Seiten perfekt getarnt.

**Besonders viele Glasfasern:** Für die Punktvariante wird eine große Anzahl an Glasfasern um den Brillenrand gelegt und zu einem Raster von direkt im Brillenglas endenden Projektionspunkten verteilt (11). Um in das Innere des Glases zu gelangen, werden mehrere Tarnröhrchen nebeneinander durch das Glas geführt (12). Die Glasfasern werden in die Glasröhrchen gefädelt und machen im Tarnröhrchen eine Biegung von ca. 1-2mm Biegungsradius (64) und zeigen dann durch eine Bohrung im Röhrchen genau in Richtung Pupille (60). Die Glasfasern weisen am Ende eine Optik auf, die in Kombination mit den Eigenschaften des Tarnröhrchens einen Projektionskegel in Richtung Pupille ausstrahlen. Dieses System ermöglicht es, die Faserprojektionen genau in die gewünschte Richtung zu Strahlen (59).

Das dichte Raster von Projektoren wird durch das Prinzip der nahen Lichtfeld-Projektion zu einem zusammenhängenden Bild (48). Durch die Technik der Projektions-Beschneidung (50,51) wird dann aus den überlappenden Bildern ein perfekt zusammengesetztes Bild. **Gekrümmtes Röhrchen und Rand:** Die Tarnröhrchen werden in eine gebogene Form gebracht um der Biegung des Brillenglases zu folgen. Um einen Leitungskanal um dem Glas herum ebenfalls zu tarnen, wird die gleiche Technik mit einer Tarn-Halbschale (61) angewendet.

Die Befestigung der Bügel kann durch eine Bohrung zwischen zwei Röhrchen erfolgen. **Mehr Projektionsebenen:** Eine wichtige Bedingung für eine Designvariante ist die Möglichkeit mehrere Projektionsebenen unterbringen zu können. Dieses wird wegen den starken Augenbewegungen für die Abbildung des Ambientes gebraucht und wird weiter unten in einem Paragrafen beschrieben. Es kann dafür ein zweites und drittes Raster parallel eingezogen werden, welches verschiedene Projektionswinkel zur Verfügung stellt. Die Projektionseinheit steuert dann je nach Augenstellung, welche Ebene genutzt wird.

**Einsatz MEMS Technik:** Bei fortgeschrittener Realisierung mit MEMS-Technik wird in den Tarnröhrchen ein komplexes stabförmiges Mikrosystem (10,70) untergebracht, welches mit MEMS, Wafer-Level-Optics und Nano-Optics Printing Methoden gefertigt wird, und welches aus Lichtleitungen (14) mit Umlenkspiegel-Weichen und Projektionsoptiken (16) sowie Steuerelektronik (13) aufgebaut ist.

### [9]SV Strichvariante (2)

Diese Variante hat ihren Namen in Anlehnung an die feinen Rillen zwischen einzelnen Glaskörpern, die jedoch in der Praxis durch die Verklebung nicht sichtbar sind.

**Schaltbarer Spiegel:** Technische Grundlage ist hier eine Methode, die es ermöglicht die Schicht zwischen zwei Glaskörper in hoher Frequenz spiegelnd, oder zu mindestens teilspiegelnd zu machen (19). Ein am Brillenrand positionierter Glasfaserprojektor (18) kann dadurch seine Projektion an dieser Spiegelfläche (21) in Richtung Pupille leiten lassen. Durch mehrerer solcher Schaltspiegel untereinander und entsprechender Schaltung, kann ein einzelner Projektor mehrere Bilder hintereinander und aus verschiedenen Richtungen erzeugen. Eine Spiegelschicht zieht sich dabei über die ganze Breite des Glases, so dass mehrere Projektoren parallel die Bilder für eine Y-Koordinate abbilden können. Es wird dadurch ein Lichtfeld-Raster von Einzelbildern vor den Augen aufgebaut. Mögliche Schaltspiegelmethoden sind:
**SV6 Frustrierte Totale interne Reflektion FTIR:** Es wird eine interne Totalreflektion, oder nur eine Frustrierte TIR durch Erweiterung eines Spaltes mittels eines PIEZO-Elements erzeugt, welches durch Ausdehnung oder Vibration den Spalt bildet.
**SV8 Electrochromic Mirror:**
   Es wird als Spiegel das System der elektrochromen Spiegel genutzt (Electrochromic Mirror).

### [10]Varianten Projektor-Anbringung

**PA1:** Die Recheneinheit kann je nach Miniaturisierungsgrad direkt an der Brille (3), oder als separate Einheit gestaltet sein. Die Verbindung kann dann kabellos oder kabelgebunden gestaltet werden.

**PA2:** Die Projektor- und Recheneinheit kann in einer Einheit hinter dem Kopf platziert sein.

**PA3:** Die Projektor und/oder Recheneinheit kann in einer Einheit in einer Tasche oder Gürtel am Körper platziert werden. Die reine Recheneinheit kann auch kabellos in der Handtasche oder einfach in der höchstens 10 Meter reichenden Umgebung des Benutzers gehalten werden.

### [11]Varianten der Lichtfeld Projektions-Beschneidung

Das integrale Lichtfeld erzeugt kreisförmige Projektionen (50) die sich überschneiden. Die Überschneidungen müssen beim Bildrendern abgeschnitten werden (clipping) (51).

**PB1:** Durch Eye-Tracking wir die Blickrichtung genau erfasst und die Clipping-Rahmen berechnet.

**PB2:** Zusätzlich wird die Pupillen-Weite von der Eye-Tracking-Kamera (53) erfasst und die Clipping-Rahmen angepasst.

**PB3:** Weiche Übergänge: Die Kanten des Clippings werden leicht Übergangslos und weich geschnitten, so dass die Projektionen mit weniger Toleranz aneinander passen.

### [12] Abdeckungsmasken-Funktionen

Die AR-Brille ist vorne mit einem hoch aufgelöstem Abdunkelungs-LCD Display (67) ausgestattet, welches das komplette Sichtfeld durch die Brillengläser abdeckt. **Hintergrund-Abdeckung für untransparente virtuelle Objekte:** Die Hauptfunktion der Abdunkelung ist es, eingeblendete virtuelle Objekte bei Bedarf undurchsichtig und somit die Realität überdeckend zu machen. Dafür wird für jedes Virtuelle Objekt eine dazugehörige Maske berechnet.

### [13]Umgebungserkennung und Objekterkennung

Es werden lokale KI-Server zur Muster-Erkennung eingesetzt. Es wird die Umgebung mit den Umgebungskameras (53) gescannt und alle Objekte durch neuronale Netzen (Deep Learning) so weit wie möglich, den bekannten logischen Objekten zugeordnet. Im Rechner wird eine digitale interpretierte Welt aufgebaut, auf welche das User-Interface zugreifen kann. Das Userinterface kann dann objektbezogen funktionieren.

### [14] Varianten der Tarnoptik

Die Tarnoptik kann in verschiedener Weise in einem dichten Glasmedium eingebracht sein. Die Form muss nicht genau ein Röhrchen sein sondern kann auch komplexere Formen annehmen und trotzdem konsistent tarnen, wie folgende:
**TO1 Rundform:** Der Tarnkanal hat eine perfekte Zylinder-Form (12).
**TO2 Ovalform:** Der Tarnkanal hat eine perfekte Oval-Form.
**TO3 Schalenform:** Am Rand des Glases hat die Tarnoptik eine Schalenform (61), die vom Rand gefüllt werden kann.
**TO4 Mit Biegung:** Die Formen sind zusätzlich zu ihrer gleichmäßigen Form verschieden stark oder gleichmäßig gebogen.
**TO5 Ganze Gitter:** Die Formen sind zu Netzen oder Gittern mit entsprechenden Abzweigungen oder Kreuzungen geformt.
**TO6: Rundungen an Abzweigungen:** Die scharfen Übergänge an Abzweigungen sind weich abgerundet.

Die Tarnfunktion wird durch die gleichmäßige Umlenkung des Lichtes erzeugt, die durch eine Vielzahl von verschiedenen Schichten (69) mit abfallender optischer Dichte um einen Hohlraum herum erzeugt wird. Diese Gradienten Verläufe können verschieden gestaltet sein:
**GR1 Verschiedene Brechungsindexe:** Die Schichten weisen verschiedene, und auf einander abgestimmte Brechungsindexe auf.
**GR2 Verschiedene dispersionswerte:** Die Schichten weisen verschieden und auf einander abgestimmte dispersionswerte auf, um die optische Konsistenz der Tarnung zu steigern.
**GR3 Sehr dicke oder dünne Schichten:** Die Schichten sind recht dünn oder dick ausgelegt.
**GR4 Ungleich stark abfallend:** Die Schichten fallen nicht gleichmäßig, sondern exponentiell oder variabel schnell in ihrer Dichte (Brechungsindex) oder ihrer Dicke ab.
**GR5 Stufen oder stufenlos:** Die Schichten sind zueinander in Stufen angelegt, oder die Schichten verlaufen in ihrer Dichte stufenlos ineinander.

### [15]Varianten des Tarnoptik Piercings

Um aus dem Inneren der Tarnung raus zu projizieren, kann es nötig sein den Tarnmantel zu durchstechen (Piercing) (69). Dies kann auf verschiedene Weise vorgenommen werden:
**TP1 Bohrung:** Es wird eine Bohrung (69) an den entsprechenden Stellen und Winkel angebracht.
**TP2 Bohrtiefe:** Es wird durch die Tiefe der Bohrung das richtige optische Verhalten eingestellt.
**TP3 Bohrform:** Es wir durch die Form der Bohrung das Verhalten geändert. Die Form kann eine Kugel, Kegel, Schlitz, Keil oder sonstige Form aufweisen.
**TP4 Füllung der Bohrung:** Das Bohrloch wird mit einem anderen optischen Medium gefüllt oder verschlossen.
**TP5 Innere Bohrung:** Die Bohrungen werden in einem Zwischenstadium des Aufbaus der Schichten getätigt, verschlossen, und der Aufbau wird weitergeführt. So wirkt die Bohrung nur von innen.

### [16]Tarnoptik Schichtaufbau und Piercing Drucks

Um die Produktion der Tarnoptik massentauglich zu gestalten, wird jeweils ein ganzes Gitter mit Rahmen Schicht für Schicht aufgebaut. Dabei wird jeweils eine UV-härtende Polymerschicht oder ein anderes Material mit entsprechendem Brechungsindex aufgebracht. Um jetzt ein optisches Piercing an den Projektions-Stellen der Tarnröhrchen vorzunehmen, werden mit "Bubblejet"-artiger Drucker-Technik auf die Stellen ein anderes Polymer mit anderem Brechungsindex gespritzt. Dieses verdrängt an diesem Punkt die zuvor aufgetragene Schicht. Danach wird die Schicht UV gehärtet und die nächste Schicht vorgenommen. Die Reinfolge der Schritte und das Druckmaterial können dabei variieren.

**PD1 Druck vor Schichtauftragung:** Es werden vor der Gesamtschichtauftragung die gepiercten Stellen bedruckt. Das Druckmaterial kann dabei auch ein Antifluss Mittel sein, das ein einlaufen der Beschichtung an diese Stelle verhindert.

**PD2 Druck nach Schichtauftragung:** Es wird nach der Gesamtschichtauftragung gedruckt.

**PD3 Nur Dotierungsmitte gedruckt:** Es wird nur eine Brechungsindex verändernde Substanz gespritzt.

**PD4 Druck vor und nach Sichtaufbringung:** Es wird eine Kombination aus Vor- und Nach-Druck vorgenommen, die auch ein zwischenhärten der Schicht enthalten kann.

**PD5 Weitere Korrektur Drucke:** Es werden noch weitere Stellen an den Schichten bedruckt um optische Korrekteren vorzunehmen die durch die Piercing-Drucke sonst stören könnten.

### [17] Varianten der Tarnoptik-Inlays

Das Innenleben der Tarnröhrchen kann je nach Technologie-Stand unterschiedlich gestaltet werden. Die Hauptaufgabe ist die richtige Positionierung und lichtleitungsschonende Verbiegung der Projektion. Auch das Schalten und Verzweigen kann bei höherem Technologiestand darin untergebracht werden. Außerdem sind Projektions-, sowie Aufnahmesysteme verlegbar.

**TI1 Struktur:** Es wird eine komplexere Halterungsstruktur gefertigt, in der die Glasfasern geführt werden und weitere optische Elemente angebracht sind.

**TI2 Optik-Inlay:** Es wird ein schmaler Mikrochip mit Wafer-Level-Optik generierten Wellenleitern, Umlenkoptiken und Linsen gefertigt, der genau die gewollten Projektionspunkt generiert und der die Leitungen am Brillen-Rand zur Verfügung stellt. Am Brillenrand ist dann ein schmaler IC mit MEMS Weichen und Optiken untergebracht, der die Verteilung des Glasfaser Signals auf diese Leitungen vornimmt.

**TI3 MEMS-Platine (70):** Es wird ein extrem schmaler und langer Mikrochip eingesetzt welcher neben elektrischen Schaltkreisen auch viele MEMS-DMD-Mikrospiegel als optische Weiche, sowie optische Leiter und Linsen integriert. Der Chip kann in Massen mit IC, MEMS (13) und Wafer-Level-Optics (15)-Technologie gefertigt werden und mit nano-Polymer-Optikdruckern verfeinert werden.

### [18]Beschreibung und Varianten der Projektions-Ebenen

Die Lichtfeld-Projektion besteht aus einem Raster von Glasfaser-Projektoren, die relativ nahe am Auge in dem Brillenglas angebracht sind. Die Pupille im Augapfel (58) befindet sich relativ nahe am Brillenglas und verschiebt sich deshalb relativ stark durch die Rotation des relativ großen Augapfels (71). Diese starke Augenbewegung findet rechts/links sowie nach oben und unten statt. Die Position des Ziels ist also stark von der Blickrichtung abhängig. Für ein übliches Display ist dieses kein Problem, weil ein normaler Bildschirm jeden Pixel mit einem hohen Betrachtungswinkel abbildet. Das Licht eines Bildschirms, auch wenn es an einer Spiegelfläche am Brillenglas reflektiert wird, leuchtet relativ stark in all Richtungen und beleuchtet den gesamten Augenbereich.

**Lichtfeld grundlegend anders:** Die Einzelprojektionen eines Lichtfeldes strahlen dagegen von einem Punkt ausgehend ein ganzes Bild wie ein Filmprojektor in Richtung Pupille. Dies ist ein grundlegend anderes Prinzip, wie das Bild in die Augen kommt. Der Projektionswinkel (74) ist dabei nur eingeschränkt.

Die Glasfaser transportiert je nach Dicke nur ein eingeschränkt aufgelöstes Bild, welches dann am Ende der Faser auf den gewünschten Austrittswinkel von 20° bis 40° (74,75) gebracht wird.

Diese Projektionspunkte werden erst wegen der recht breiten Pupille im menschlichen Auge zu einem runden Bild. Der Austrittswinkel der Projektion bestimmt die Auflösungsdichte des Bildes.

Um ein möglichst hoch aufgelöstes Bild im gerade fokussierten Bereich zu bekommen, müssen im Lichtfeld in dieser Richtung die Projektoren eine besonders kleinwinklige Projektion liefern (59). Um ein niedrig aufgelöstes Bild der Umgebung im nicht fokussierten Bereich zu bekommen, können im Lichtfeld in dieser Richtung die Projektoren eine weitwinklige Projektion liefern (60), damit die Projektionen für möglichst weite Blickwinkel der Pupille nutzbar sind.

Wegen diesen teils kleinen Projektionswinkeln muss das Lichtfeld genau auf die Augenbewegungen des Augapfels abgestimmt werden.

Diese Umstände begründen auch die Notwendigkeit, mindestens zwei komplette Projektionsfeld-Ebenen parallel einzusetzen. Eine Ebene für die fokussierten Bereiche (47), und eine für die Abbildung des restlichen unfokussierten Ambientes (46).

Durch die Technik der direkt an den projektionspunkten befindlichen optischen Weichen in MEMS-Technik sowie optimalen Lichtleitern in Wafer-Level-Optics Verfahren, ist der Anzahl der eingesetzten Projektionspunkte für verschiedene Auflösungen keine Grenzen gesetzt. Die Anzahl der durchzuleitenden Glasfasern wird extrem reduziert und so das Bündel sehr dünn. Die einzelnen Fasern können dagegen viel dicker ausfallen und können höher auflösen.

### [19]Varianten Sichtfeld-Auflösungsreduzierung

Die theoretische Pixelauflösung für eine hoch aufgelöste, und das komplette Sichtfeld abdeckende AR-Brille erreicht leicht 20 bis 40 Megapixel. Zum Glück ist jedoch eine AR-Hologramm-Projektion im praktischen Gebrauch grundlegend anders als ein klassischer Bildprojektor oder Monitor.

**AR 1 Nur vorhandene Objekte:** Bei der Augmented Reality wird fast nie das Gesamte Blickfeld mit virtuellen Objekten vollgepflastert. Es werden meist nur vereinzelnd Objekte (46) in die Realität eingeblendet.

**AR 2 Nur fokussierter Bereich HQ:** Ein zweiter Aspekt der praktischen AR ist der Umstand das ein Mensch immer nur an eine Stelle blicken kann und auch nur da hochaufgelöst und fokussiert die Details wahrnimmt (47). Die ganze restliche Umgebung wird in viel geringerer Auflösung wahrgenommen (45). Ein AR-Hologramm-Projektor weis durch die Augenverfolgung immer genau wohin und in welche Tiefe geblickt wird. Mit dieser Information braucht der Projektor immer nur einen ganz kleinen Teil in höchster Auflösung projizieren. Die restlichen Projektoren können mit viel weniger Bildzyklen einfach geringer auflösen. Dies bringt nochmals enorme Bildratenersparnis. Die Arten der Auflösungsreduzierung kann für das Ambiente in Form von niedrigerer Bildfrequenz, Pixelauflösung, Farbtiefe und Fokussierbarkeit vorgenommen werden.

**AR 3 Geringere Bildrate im Fokusbereich:** Ein dritter Aspekt ist, dass die Widerholungsrage für fokussierte relativ stille Objekte viel geringer zu sein braucht als schnell bewegte Objekte. Das menschliche Auge bemerkt Flimmern nur in der Peripherie und ist im fokussierten Bereich (47) recht langsam.

Technisch kann so die Widerholungsrate im fokussierten Bereich runtergesetzt werden und bei schneller Bewegung kann die Auflösung leicht reduziert werden.

**AR 4 Fokusanpassung nur im Fokusbereich:** Die Möglichkeit der tatsächlichen Fokussierung auf die Objekte brach nur im Fokusbereich ermöglicht werden.

### [20]Matrix-Holo- und Hybrid-Projektoren (35)

**A1 Matrix-Projektor:** Es wird die Transformationsmatrix TM nicht optisch durch ein Transformations-Hologramm vorgenommen sondern rein rechnerisch im Computer auf das Bild angewendet. Der SLM wird auf orthodoxe Weise genutzt um dieses Bild vor den Glasfaserenden zu platzieren. Man erspart sich dadurch die Komplexität der computergenerierten Hologramme und braucht nur ein dafür optimiertes SLM mit Beleuchtungssystem (83).

**B1 Hybrid-Projektor:** Es wird als Bild ein normales Pixelraster von einem orthodox genutzten SML genutzt. Für die Anwendung der Glasfaser-Transformationsmatrix wird jedoch eine zweite SLM Fläche als CGH genutzt und damit ein echtes Hologramm vor die Augen projiziert (76,77). Dies ist die einfachste Umsetzung, die realisiert werden kann, weil nur wenig extra Rechenleistung und Know-How für die CGH (Computer Generierten Holografie) (78,79) eingesetzt werden muss.

**B2 Hybrid-Projektor:** Es wird wie bei B1 verfahren, jedoch wird auf die Augenfokussierung der Objekte nicht verzichtet. Das zweite SLM transformiert hierbei nicht nur die TM für die Glasfaser, sondern transformiert zusätzlich die Abbildungstiefe der einzelnen Pixel. Die Information dafür wird aus dem Z-Buffer des vorgeschalteten ausgerechneten 2D Bildes entnommen.

**C1 Hologramm-Projektor:** Wo in der B Varianten noch direkt ein Bild aus Pixel mit traditionellen OpenGL Methoden berechnet wird, können die Bildberechnungen der C Varianten direkt aus den Modellen die Hologramm-Daten, also die Interferenzmuster erzeugen, die dann auf den SLM übertragen werden. Erst nach Bestrahlung des SLM mit den entsprechend modulierten RGB Farbkomponenten Lasern entsteht die Einkoppel-Lichtfront. Es kann ein einziger SLM genutzt werden (82), um die Bildgebung und Glasfaser-Transformation in einem Schritt durchzuführen. Dafür müssen jedoch in hoher Frequenz entweder die Transformationen multipliziert oder das Hologramm (84) berechnet werden.

### [21]Lichtquellen und Speckles-Reduktion

**E1 Reduzierte Kohärenz:** Die Laserlicht-Quelle wird, für das holografische Verfahren im noch erträglichen Maße, in einem, oder mehreren verschiedenen Aspekten durchmischt moduliert.
1. So wird die Lichtwellenlänge in ein entsprechend begrenztes durchmischtes Spektrum moduliert.
2. Die Phasen werden in ihrer Verschiebung gleichmäßig durchmischt. (Moving Diffusers oder Multimodefaser)
3. Der Winkel der Strahlen zueinander (die Parallelität) wird in einem entsprechend begrenzten Spielraum durchmischt.

Diese Modulationen können durch bewegte Diffuser, Piezo Bender, Akustooptische Modulatoren oder passive Durchleitung durch Multimode-Glasfasern erreicht werden.

**E3 Glasfaserdurchlauf:** Der systembezeichnende Durchlauf der Wellenfront durch eine Multimode Glasfaser bis vor die Pupille, bewirkt eine Kohärenz-Phasendurchmischung die eine Speckle-Bildung stark unterdrückt.

**E4 Konstante Hologramm-Variation:** Wird ein Beugungsmuster generierungsverfahren für den Bildinhalt genutzt welches mehrere verschiedene Wege zur Erzeugung des gleichen Ergebnisses ermöglicht, so kann die Erzeugung der Bilder ständig andere Mustervarianten nutzen. Ein Zufallsgenerator kann die jeweils nächste Variante auswählen. Die Speckle-Muster würden immer nur in einem Zyklus auftauchen, während die gewollten Bilder bei jedem Zyklus verbleiben.

**E5 Piezo-Verschiebung:** Es wird durch piezo-vibrierende Spiegel oder Diffuser die Kohärenz reduziert.

### [22] Aufsplittungsfeld, Beschreibung und Varianten

Die AR-Brille basiert auf ein dichtes Raster von Glasfaser-Projektionspunkten, die nahe vor den Augen platziert sind. Je größer das aktive Sichtfeld von maximal singvollen 220 Grad horizontal und je höher die dafür benötigte virtuelle Punktauflösung, desto mehr Glasfaserenden werden eingesetzt. Von diesen Glasfasern werden jedoch je nach Anzahl der eingesetzten SLM-Projektoren, und je nach eingesetzter holografischer Parallelnutzung der Projektoren, nur wenige (2-32) parallel eingesetzt. Diese Glasfasern müssen also in hoher Frequenz selektiert werden. Die abstrakte Basis dafür ist die optische Weiche, und letztlich wird ein Mix aus verschiedenen Weichenformen eingesetzt.

**Einkoppelfeld als erste Weichen-Stufe:** Bei der AR-Brille erfüllt das Einkoppelfeld (28) neben dem Prozesses des Einkoppelns der Bilder in die Faserenden auch die Funktion der Selektierung der Faserenden. Diese Selektierung wird bei der Hologramm-Projektion dabei bereits in der Bildberechnung berücksichtigt, und ist somit sehr effektiv, jedoch tief in die Berechnungsmethoden integriert. Das Einkoppelfeld (28) ist jedoch wegen der möglichst großen Optik pro Faser, in der Anzahl der selektierbaren Fasern beschränkt.

**Zweite Weichenstufe:** Die Glasfasern vom Einkoppelfeld können auf dem Weg zu den Projektions-Austrittspunkten in verschiedener Weise verzweigt werden, um auf die Endanzahl der gebrauchten Projektionen zu kommen. Dies kann über Einzelweichen und einer Baumstruktur geschehen. Es können jedoch auch Weichen mit mehreren Abzweigungen eingesetzt werden.

**Aktive Weiche:** Am besten sind aktive Weichen, die den Lichtstrom komplett abzweigen. Manche Techniken schaffen aber nur knapp 100%, wobei das Restlicht entweder tolerierbar ist, oder von einer zusätzlichen Sperrschicht blockiert werden muss.

**MEMS Technik:** Bei der MEMS Fabrikationstechnik kann das Schema noch soweit optimiert werden, so das auch die Anzahl der verlegten Fasern stark reduziert werden kann. Dies wird dadurch erreicht, dass die Weichen bis kurz vor die Austrittspunkte verleg werden.

**Weiche und Winkel:** Durch die besonders kleine Bauform der MEMS oder Mikrooptik, kann direkt im Tarnröhrchen eine Kombination aus aktiver Weiche und 90 Grad Umlenkung vorgenommen werden (16). Dadurch werden zwei Fliegen mit einer Klappe geschlagen, weil die 90 Grad Umlenkung ebenfalls ein kritischer Punkt ist. Durch die massive Einsparung von Glasfaserleitungen können die Fasern viel dicker ausfallen und dadurch viel höher aufgelöste Bilder durchleiten.

**Kombination von Ambiente- und Focus-Fasern:** Werden die Glasfasern massiv zusammengelegt, besteht auch die Möglichkeit die Glasfasern für Focus- und Ambiente-Projektoren zusammenzulegen. Diese Projektortypen unterscheiden sich nämlich nur in der Einkoppeloptik und der Austrittsoptik. Die aufwändigere Einkoppeloptik für Fokusprojektoren kann dabei auch für einfachere Ambienteprojektoren genutzt werden.

**Faserzusammenführung:** Zur Zusammenführung von Focus- und Ambiente-Projektoren können die zwei Glasfasern auch in eine zusammenlaufen.

**Weichentechniken:** Es können verschiedene physikalische Methoden zum Weichen stellen genutzt werden:
**WT1 Piezo-Aktuatoren:** Es werden Optiken physikalisch gegeneinander verschoben. So können ganze Felder weitläufig mit Piezo-Aktuatoren verschoben werden.
**WT2 FLCD:** Die Selektion kann durch einfaches Öffnen und Schließen von FLCD-Blenden vorgenommen werden (27).
**WT3 FTIR:** Einstellbare frustrierte oder volle interne Totalreflektion FTIR.
**WT4 Electrochromic Mirror:** Schalten mit elektrochromen Schichten.
**WT5 MEMS:** Mikromechanisches Drehen, Senken oder Schieben von Spiegel oder anderen Elementen.
**WT6 DMD:** Kippen von DMD-Spiegeln (16) als ein ganzes Feld oder als ein großer Spiegel. **Weichenbäume:** Durch kombinieren mehrerer Weichensystem können viele Verzweigungen realisiert werden.

**WB1 Kaskadierende Weiche:** Es kann ein Weichen-Typ viele male hintereinander geschaltet werden um an einem Strang viele Abweichungen zu haben (10). Dies ist besonders effektiv wenn der Weichentyp die Weiterleitung der Signale an einem Weichende besonders effektiv durchleiten kann.

**WB2 Baum-Verästelung:** Alle Weichenenden werden weiter verästelt.

### [23]Besondere Weichenformen im Tarnröhrchen-Inlay

Die AR-Brille kann die letzten Weichen kaskadierend auf den Tarnröhrchen Inlays anbringen, welches in MEMS und/oder Wafer-Level-Optics Technik gefertigt werden (10). Die Projektionsoptiken können zusätzlich z.B. mit Nano-Gradienten-Polymer-Drucker auf UV-Härtungsbasis verfeinert werden. Die Weiche kann gleich eine ca. 90 Grad Drehung mit ausführen. Dafür sind folgende Designvarianten vorteilhaft:

### DMD Spiegel mit Auskoppel und Wiedereinkoppel-Optiken:

Die Weichen-Funktion wird durch einen großen, oder einem Raster von DMD-Spiegeln durchgeführt. Die Spiegel können dabei in verschiedene Positionen gekippt werden.

Ein einzelner Spiegel kann dabei eine Fokussierende Schalenform haben, oder das Spiegel-Array ebenfalls eine gewünschte Fokussierung ausüben.

Je nach Kipprichtung kann die Fokussierung anders ausfallen.

Die Auskopplung kann durch die Fokussierung direkt, oder über eine weitere Optik als endgültige Projektion genutzt werden. Die Steuerung der Spiegel braucht nicht individuell sondern nur für alle zusammen erfolgen.

Die Wellenfront wird bei der Weiterleitung wieder in eine Einkoppeloptik geleitet.

Durch Erweiterung und größerer Wellenleiter im System kann die Wellenfront weniger steil getrimmt werden. Die Wellenfront kann durch einen steilen Totalreflektions-Spiegel auf die DMDs geleitet werden. Die ausgekoppelte Wellenfront kann dagegen wegen dem steileren Winkel durch den Spiegel durch.

### [24] Verfeinerte Glasfaserspitze

Die Enden der Glasfasern können mit Nano-optischen Polymer-Druckern eine feine Linsenoptik aufgetragen bekommen. Die Drucker können auch Gradienten-Optiken drucken und die Öffnung der Faser so erweitern und gestallten, das der komplexe Lichtwellenfluss nicht gestört wird und so das durch die Öffnungsgröße eingeschränkte Auflösungsvermögen des Gesamtsystems gesteigert wird. Dabei brauch gerade nicht auf den Geometrieerhalt geachtet werden, da die Geometrie durch die Transmissionsmatrix wider hergestellt wird.

### [25] Hologrammoptimierte FLCOS und DMD Systeme

Die bekannten SLM-Systeme sind primär für das normale Video projizieren entwickelt worden. Sie können auch gut für CGH Anwendungen genutzt werden.

Dennoch sollte für die AR-Brille das SLM-System auf die CGH Anwendung und für die Glasfasereinkopplung optiert werden, da von der Wellenfront nur eine einzige Perspektive genutzt wird und der Rest, anders als bei normalen Projektor irrelevant ist.

### KF2 Komplex modulierendes FLCOS SLM

Um eine unabhängig einstellbaren Amplituden- und Phasen-Modulationen zu erreichen, werden zwei dicke FLCD-Schichten eingesetzt, die jeweils in gegengesetzter Richtung die Polarisation drehen können. Eine reine Phasen-Modulation kann so durch gleichstarke Aktivierung der beiden Schichten erreicht werden. Dabei wird die Polarisierung des Lichtes erst in eine Richtung gedreht und dann genau wieder zurückgedreht. Die Polarisierung bleibt am ende die gleiche. Nur der Brechungsindex der beiden Schichten, und damit die Phasenverschiebung verändert sich je nach stärke der Aktivierung.

Eine verschieden starke Aktivierung der beiden Schichten erzeugt dabei zusätzlich eine Polarisierungsdrehung und damit eine Amplituden-Modulierung.

### KD2 Verschiedene Lichtquellen

Durch die Nutzung verschiedener Lichtquellen aus verschiedenen Richtungen, können bei entsprechender Kombinierung der Lichtquellen viele verschiedene Amplitudenstärken generiert werden.

Die verschiedenen Lichtquellen können auch verschiedene Phasenverschiebungen bieten um Einkoppel-Muster mit verschiedenen Phasen zu generieren.

### KD3 Binär Phasen ModulierenderMEMS-SLM

Eine vereinfachte Variation lässt den Mikrospiegel nur zwischen zwei Phasenverschiebungs-Positionen schalte wie 0 und π der genutzten Wellenlänge. Als dritten Zustand kann der Spiegel noch ganz weggekippt werden um zusätzlich als binärer Amplituden-Modulator zu fungieren.

**CM1: Mehrfach Richtung kippende Mikrospiegel:** Die Spiegel können nicht nur in zwei Richtung kippen sondern in mehr Richtungen, um noch mehr verschiedene Phasen oder Amplituden aus der Beleuchtungslichtfront rauszugreifen.

## Patentansprüche

1. Augmented-Reality(AR)-Brille zur Einmischung virtueller Bilder in ein durch mindestens ein Brillenglas für einen Träger der Brille sichtbares Bild, umfassend eine Mehrzahl von Glasfaser-Projektoren (59,18) aus Multimode-Glasfasern (42, 17), die ein virtuelles Bild mit großer Schärfentiefe in mindestens ein Auge des Brillenträgers projizieren, wobei das virtuelle Bild ein Integralbild(Integral Imaging) aus einem Raster von nebeneinander und übereinander angeordneten, von den Glasfaser-Projektoren (59, 18) erzeugten Einzelprojektionen (48) ist, die für den Brillenträger bei naher Betrachtung zu einer Gesamtprojektionen verschmelzen, wobei jede der Einzelprojektionen (48) ein Ausschnitt (37) des virtuellen Bildes ist, wobei an einem Eintrittsende jeder Glasfaser (42, 17) ein rechnergesteuerter Spatial Light Modulator (SLM) (24) oder ein anderes bildgebendes System angebracht ist, für das ein Rechner ein komplexes Pixelmuster berechnet, das von der Umformung des ursprünglichen Bildes durch eine Transmissionsmatrix (36) der Glasfaser (42, 17) bestimmt ist, wobei eine Optik eine vom Spatial Light Modulator (SLM) als Hologramm oder als komplexe Projektion gelieferte Wellenfront mit Amplituden und relativen Phasenverschiebungen (39) in die Glasfaser (42) einkoppelt (41), und
wobei in einer Punktvariante zur Erzeugung der Einzelprojektionen mehrere Multimode-Glasfasern um den Brillenrand gelegt und durch Tarnkanäle zu einem Raster von direkt im Brillenglas nebeneinander und übereinander angeordneten Projektionspunkten geführt werden, wobei die Glasfasern (42) am Ende eine Optik aufweisen und somit die Glasfasern Projektoren bilden und so in Kombination mit den Eigenschaften der Tarnkanäle die in die einzelne Multimode-Glasfaser eingekoppelte Wellenfront als Lichtsignal in einem Projektionskegel in Richtung Pupille ausstrahlt,
oder wobei in einer Strichvariante zur Erzeugung der Einzelprojektionen (48) mehrere Multimode-Glasfasern (17) mit jeweiligen Glasfaserprojektor-Enden (18) zum Brillenrand geführt werden und die einzelne in die Multimode-Glasfaser (17) eingekoppelte Wellenfront als Lichtsignal aus dem jeweiligen Glasfaserprojektor-Ende (18) austritt und sich im Brillenglas ausbreitet, bis das Lichtsignal durch eine der spiegelnd geschalteten schnell schaltbaren Spiegelflächen (19) aus dem Brillenglas auf das Auge geleitet wird.

2. Augmented-Reality(AR)-Brille nach Anspruch 1, **dadurch gekennzeichnet, dass** für die Punktvariante die Glasfaser-Projektoren (59) oder daran anschließende verlängernde mikrooptische Systeme durch die Tarnkanäle im Brillenglas direkt zu einer optimalen Position für das Integralbildraster verlegt sind (64), wobei eine Gradienten-Optik durch das Brillenglas hindurchtretendes Licht um die Kanäle herumlenkt (66) und die Kanäle von außen unsichtbar macht, wobei der Gradient des Brechungsindex eines optischen Mediums der Gradienten-Optik in Richtung der Kanäle von dem umgebenden hohen Index zu einem niedrigeren Index abfällt (69).

3. Augmented-Reality(AR)-Brille nach Anspruch 1, **dadurch gekennzeichnet, dass** für die Strichvariante eine Vielzahl von Glasfaserprojektoren (18) um einen Rand eines Brillenglases herum positioniert, und von dort aus in das Brillenglas gerichtet ist, und dass das Brillenglas mit mehreren übereinander oder nebeneinander liegenden, schnell schaltbaren Spiegelflächen (19) versehen ist, die, wenn sie spiegelnd geschaltet sind, die Projektion umlenken (21) und aus dem Brillenglas auf das Auge leiten.

4. Augmented-Reality(AR)-Brille nach Anspruch 1, **dadurch gekennzeichnet, dass** für die Punktvariante in den Tarnkanälen ganze Mikrooptik-Systeme (10) verborgen sind, die zusätzlich IC-Schaltlogik, und/oder MEMS Mikro-Mechaniken oder DMD-Spiegelfelder und/oder 3D-gedruckte Gradienten Mikrooptiken integrieren (70, 15).

5. Augmented-Reality(AR)-Brille nach einem der vorhergehenden Ansprüche, **dadurch gekennzeichnet, dass** Projektionspunkte des Integralbildes in mindestens zwei Rasterebenen (47, 46) parallel positioniert sind, wobei für jede Ebene verschiedene Austrittsoptiken, verschiedene Austrittswinkel und dadurch verschiedene Auflösungen vorgesehen sind.

6. Augmented-Reality(AR)-Brille nach einem der vorhergehenden Ansprüche, **dadurch gekennzeichnet, dass** die Überlappungen der nebeneinander und übereinander angeordneten Einzelprojektionen auflösungseffizient passend zueinander beschnitten werden können (51), indem die Abstände der integralen Projektionspunkte zueinander (11) im Verhältnis zu einer optimalen oder minimalen Pupillengröße des Brillenträgers gewählt werden (58), und/oder indem die Austrittsoptik der Projektionspunkte so geformt ist, dass die Projektion eine effektive nutzbare quadratische Form erzeugt, und dass mindestens eine Augenkamera (53) angebracht ist, die die Größe der Pupillen misst.

7. Augmented-Reality(AR)-Brille nach einem der vorhergehenden Ansprüche, **dadurch gekennzeichnet, dass** der SLM (Spacial Light Modulator) (24) außerhalb des Gesichtsfelds in einem am Hinterkopf platzierten Hologramm-Projektor (3) angebracht ist, und dass der SLM (24) von mindestens einer Lichtquelle (22) angeleuchtet wird, und dass eine vom SLM (24) erzeugte Lichtfront auf eine weitere SLM-Fläche (76) oder direkt auf eine Einkoppel-Optik (26) fällt, und dass in einem Einkoppelfeld (28) mindestens eine Glasfaser mit vorgeschalteter Einkoppel-Optik platziert ist, und dass die Faser durch den Brillenbügel (9) oder auf einem anderen Weg zum Brillenglas führt, wo an mindestens einer Stelle der Projektionsaustrittspunkt positioniert ist, der weitere Optiken, oder Lichtleiter-Verlängerungen mit optischen Weichen und Mikrooptiken, oder ganze Chipsysteme mit IC-Logik (10) und MEMS-Elementen als Weichen und Mikrooptiken aufweisen kann.

8. Augmented-Reality(AR)-Brille nach einem der vorhergehenden Ansprüche, **gekennzeichnet durch** einen für die AR-Glasfaser-Projektion optimierten DMD-Chip SLM (Spatial Light Modulator) zur Nutzung multipler oder komplexer Lichtquellen, der eine Mehrzahl von Mikrospiegeln auf dem DMD-Chip jeweils in zusätzliche Richtungen und Positionen kippen oder einstellen kann, und/oder verschiedene zusätzliche Spiegel- oder Beugungs-Strukturen auf den einzelnen Spiegeln aufweist, um unterschiedliche Lichtquellen aus verschiedenen Richtungen zur Projektion zu nutzen.

9. Augmented-Reality(AR)-Brille nach einem der vorhergehenden Ansprüche, **gekennzeichnet durch** ein für die AR-Glasfaser-Projektion optimiertes FLCOS(Ferroelectric Liquid Crystal on Silicon)-SLM mit darauf befindlichen Spiegeln, die mehrere unabhängig einstellbare FLCD(Ferroelectric Liquid Crystal Display)-Schichten aufweisen, um Grauwerte und Phasenverschiebungen unabhängig einzustellen.

10. Augmented-Reality(AR)-Brille nach einem der vorhergehenden Ansprüche, **gekennzeichnet durch** Glasfasern zum Durchlauf des Lichtes und/oder vibrierende piezoelektrisch bewegte Spiegel oder Diffuser zur Reduzierung der Kohärenz der Lichtquelle.

11. Augmented-Reality(AR)-Brille nach einem der Ansprüche 7 bis 10, **gekennzeichnet durch** ein Einkoppelfeld (28) mit mehreren Einkoppel-Optiken als erste Stufe, das wie eine Glasfaser-Mehrfach-Weiche eingesetzt wird, wobei im Hologrammprojektor (3) die Hologramme selber die jeweilige Einkoppeloptik ansteuern, während die nicht gebrauchten Glasfasern durch vorgelagerte FLCD(Ferroelectric Liquid Crystal Display)-Blenden (27) oder andere Blenden verschlossen werden.

12. Augmented-Reality(AR)-Brille nach Anspruch 11, **dadurch gekennzeichnet, dass** nach dem Einkoppelfeld (28), aktive Glasfaser-Einzel-Weichen oder hintereinander schaltende Weichensysteme die Ansteuerung der Projektionspunkte ermöglichen (10), wobei diese durch MEMS-Elemente geschalt werden, oder durch DMD- Spiegel oder elektrochrome Spiegel- oder Piezo-Aktuatoren geschaltet werden.

13. Augmented-Reality(AR)-Brille nach einem der vorhergehenden Ansprüche, **dadurch gekennzeichnet, dass** an den Glasfaserenden zum Ein- und Austreten der Wellenfronten eine Gradient Index-Fasererweiterung oder Verengung angebracht ist, die es ermöglicht, eine höhere Auflösung oder bessere Punktlichtquellen zu erzeugen.

14. Verfahren zur Einmischung virtueller Bilder in einer Augmented-Reality(AR)-Brille in ein durch mindestens ein Brillenglas für einen Träger der Brille sichtbares Bild, wobei durch eine Mehrzahl von Glasfaser-Projektoren (59, 18) aus Multimode-Glasfasern (42) ein virtuelles Bild mit großer Schärfentiefe in mindestens ein Auge des Brillenträgers projiziert wird, wobei das virtuelle Bild ein Integralbild(Integral Imaging) aus einem Raster von nebeneinander und übereinander angeordneten, von den Glasfaser-Projektoren (59,18) erzeugten Einzelprojektionen (48) ist, die für den Brillenträger bei naher Betrachtung zu einer Gesamtprojektionen verschmelzen, wobei jede der Einzelprojektionen (48) ein Ausschnitt (37) des virtuellen Bildes ist, dass für einen an einem Eintrittsende jeder Glasfaser (42) angebrachten rechnergesteuerten Spatial Light Modulator (SLM) (24) oder ein anderes bildgebendes System von einem Rechner ein komplexes Pixelmuster berechnet wird, das von der Umformung des ursprünglichen Bildes durch eine Transmissionsmatrix (36) der Glasfaser bestimmt ist, dass eine vom Spatial Light Modulator (SLM) (24) als Hologramm oder komplexe Projektion gelieferte Wellenfront mit Amplituden und relativen Phasenverschiebungen (39) durch eine Optik (40) in die Glasfaser (42) eingekoppelt wird (41), und
wobei in einer Punktvariante zur Erzeugung der Einzelprojektionen mehrere Multimode-Glasfasern (42) um den Brillenrand gelegt und durch Tarnkanäle zu einem Raster von direkt im Brillenglas nebeneinander und übereinander angeordneten Projektionspunkten geführt werden, wobei die Glasfasern am Ende eine Optik aufweisen und somit die Glasfasern Projektoren bilden, und so in Kombination mit den Eigenschaften der Tarnkanäle die in die einzelne Multimode-Glasfaser (42) eingekoppelte Wellenfront als Lichtsignal in einem Projektionskegel in Richtung Pupille ausgestrahlt wird,
oder wobei in einer Strichvariante zur Erzeugung der Einzelprojektionen (48) mehrere Multimode-Glasfasern (17) mit jeweiligen Glasfaserprojektor-Enden (18) zum Brillenrand geführt werden und die einzelne in die Multimode-Glasfaser (17) eingekoppelte Wellenfront als Lichtsignal aus dem jeweiligen Glasfaserprojektor-Ende (18) austritt und sich im Brillenglas ausbreitet, bis das Lichtsignal durch eine der spiegelnd geschalteten schnell schaltbaren Spiegelflächen (19) aus dem Brillenglas auf das Auge geleitet wird.

15. Verfahren zur Einmischung virtueller Bilder nach Anspruch 14, **dadurch gekennzeichnet, dass** in einem ersten Kalibrierungs-Prozess (87) für alle verlegten Multi-Mode Glasfasern (92) die lichtdurchmischende Eigenschaft (96) der Faser für alle Farbkomponenten und alle möglichen Durchleitungswege (102) getrennt gemessen wird und daraus mathematische Transformations-Matrizen (98) statistisch berechnet werden, oder die Messungen in anderen Datenformen gespeichert und weiter zum optimalen Gebrauch optimiert werden, dass im normalen Projektions-Prozess die für ein SLM benötigten Bilder oder Beugungsmuster von einem Rechner aus dem abzubildenden Bild selber, sowie aus der gespeicherten Transformationsmatrix oder den anderen gespeicherten und optimierten Transformations-Informationen (84) zusammensetzt und berechnet werden, dass von einem SLM die daraus entstehende Wellenfront (39) jeweils in schneller Sequenz zeitlich hintereinander in den verschiedenen Farbkomponenten und für die benötigten Projektionspunkte generiert und in die jeweilige Glasfaser eingekoppelt wird, und dass am Brillenglas eventuell weitere Weichen (10) oder Spiegelflächen (19) entsprechend eingestellt werden, um das Licht zu den gewünschten Austrittspunkten zu leiten.

16. Verfahren zur Einmischung virtueller Bilder nach einem der Ansprüche 14 bis 15, **dadurch gekennzeichnet, dass** für die Punktvariante die Glasfaser-Projektoren (42) oder daran anschließende verlängernde Lichtkanäle oder optische Systeme durch die Tarnkanäle im Brillenglas direkt zu einer optimalen Position für das integrale Bildraster verlegt werden (64), wobei eine Gradienten-Optik durch das Brillenglas hindurchtretendes Licht um die Kanäle herumlenkt (66) und die Kanäle von außen unsichtbar macht, wobei der Gradient des Brechungsindex des optischen Mediums (69) von einem niedrigen Index im Inneren zu einem höheren Index nach außen hin, bis zum Index des umgebenden Glases, in Schichten oder übergangslos aufgebaut wird.

17. Verfahren zur Einmischung virtueller Bilder nach einem der Ansprüche 14 bis 16, **dadurch gekennzeichnet, dass** Projektionspunkte des Integralbildes in mindestens zwei Rasterebenen (47, 46) parallel angesteuert werden (74, 75), dass ein vom Brillenträger fokussierter Bereich von einer Augenkamera (53) registriert wird, und dass festgelegt wird, welche hoch aufgelösten Projektionspunkte und welche niedrig aufgelöste Projektionspunkte angesprochen werden müssen, wobei für jede Ebene verschiedene Auflösungen und Farbtiefen gerendert werden können.

18. Verfahren zur Einmischung virtueller Bilder nach einem der Ansprüche 14 bis 17, **dadurch gekennzeichnet, dass** die Überlappungen der einzelnen Integral-Bild-Projektionen passend zueinander beschnitten werden (51), indem die Pupillengröße und/oder die Umgebungslichtstärke durch Augenkamera und Sensoren ermittelt werden und in die Berechnung der Clipping-Rahmen einfließen, und dass während dem Bildrendering die überstehenden Bildbereiche hart, oder mit weichem Übergang, gar nicht gerendert werden.

19. Verfahren zur Einmischung virtueller Bilder nach einem der Ansprüche 14 bis 18, **dadurch gekennzeichnet, dass** das Generieren der Bilder vornehmlich durch holografische Methoden verwirklicht wird, also durch computerberechnete komplexe Beugungsmuster, die auf dem SLM abgebildet mit Laserlicht oder anderem Licht beschienen werden und so eine komplexe Wellenfront erzeugen, die sowohl Amplituden als auch Phasenverschiebung einstellen, wobei durch Beleuchtung des SLM mit multiplen Lichtquellen oder komplexeren Lichtfronten und durch die Nutzung optimierten SLM Konstruktionen, die Qualität und Graustufentiefe der Hologramme für den Glasfaser-Projektor gesteigert werden können.

20. Verfahren zur Einmischung virtueller Bilder nach einem der Ansprüche 14 bis 19, **dadurch gekennzeichnet, dass** die generierten Bilder vornehmlich durch einfache Pixelgrafik verwirklicht werden, also durch direkte Übertragung der ausgerechneten komplexen Amplituden- und Phasen-Musters, jedoch unter Verwendung von optimierten SLM-Konstruktionen und komplexeren Beleuchtungen, mit denen dann ebenfalls Amplituden sowie phasenverschiebungs-differenzierende Projektionen generiert werden.

21. Verfahren zur Einmischung virtueller Bilder nach einem der Ansprüche 14 bis 20, **dadurch gekennzeichnet, dass** bei Nutzung eines Glasfaser-Projektoren-Optimierten DMD-SLMs, zusammen mit einer jeweils dafür geeigneten multiplen oder komplexen Lichtquelle, das berechnete SLM-Muster eine optimierte Mischung aus den gegebenen Lichtquellen zusammenstellt, um ein optimales Amplituden- und Phasenverschiebungsmuster am Einkoppelpunkt zu erzeugen.

22. Verfahren zur Einmischung virtueller Bilder nach einem der Ansprüche 14 bis 21, **dadurch gekennzeichnet, dass** für eine niedrig aufgelösten Glasfaserprojektion 3 SLM-Zyklen für die 3 Farbkomponenten ausreichen, da die Grauwerte pro Zyklus durch das Hologramm, der multiplen Lichtquellen, oder durch das Durchleitungsmuster (96) pro Pixel generiert werden, wodurch es mit einem schnellen SLM ermöglicht wird, die große Anzahl an Ambiente-Projektionen zu bewältigen.

## Claims

1. Augmented reality (AR) spectacles for mixing virtual images into an image that is visible for a wearer of the spectacles through at least one spectacle glass, comprising a plurality of optical fiber projectors (59, 18) made of multimode optical fibers (42, 17) which project a virtual image with a large depth of field into at least one eye of the spectacle wearer, wherein the virtual image is an integral image of a grid of individual projections (48) generated by the optical fiber projectors (59, 18) arranged besides one another and above one another, which, when viewed from close proximity, for the spectacle wearer merge into an overall projection, wherein each of the individual projections (48) is a section (37) of the virtual image, wherein at an entry end of each optical fiber (42, 17) a computer-controlled spatial light modulator (SLM) (24) or another imaging system is mounted, for which a computer calculates a complex pixel pattern, which is determined by the transformation of the original image through a transmission matrix (36) of the optical fiber (42, 17), wherein an optics couples (41) a wave front supplied by the spatial light modulator (SLM) as a hologram or as a complex projection with amplitudes and relative phase shifts (39) into the optical fiber (42), and wherein in a point variant, for generating the individual projections, a large number of multimode optical fibers is routed around the spectacle rim and is distributed to a grid of projection points arranged directly next to one another and above one another in the spectacle glass through camouflage tubes, wherein the optical fibers (42) have an optical system at their end and thus the optical fibers form projectors and thus in combination with the properties of the camouflage tubes, the wave front coupled into the individual multimode optical fiber is emitted in the direction of the pupil in a projection cone as a light signal, or wherein in a line variant, a plurality of multimode optical fibers (17) having respective optical fiber projector ends (18) are directed to the spectacle rim for generating the individual projections (48) and the individual wave front coupled into the multimode optical fiber (17) exits the respective optical fiber projector end (18) as a light signal and propagates in the spectacle glass, until the light signal is directed onto the eye from the spectacle glass through one of the fast-switching mirror surfaces (19), which are switched to be reflective, from the spectacle glass into the eye.

2. Augmented reality (AR) spectacles according to claim 1, **characterized in that** for the point variant, the optical fiber projectors (42) or adjoining extending micro-optical systems are routed (64) through the camouflage channels in the spectacle glass directly to an optimum position for the integral image grid, wherein a gradient optics deflects (66) light that passes through the spectacle glass around the channels and makes the channels invisible from the outside, wherein the gradient of the refractive index of an optical medium of the gradient optics decreases (69) in the direction of the channels from the surrounding high index to a lower index.

3. Augmented reality (AR) spectacles according to claim 1, **characterized in that** for the line variant, a plurality of optical fiber projectors (18) are positioned around a rim of a spectacle glass and are directed from there into the spectacle glass, and **in that** the spectacle glass is provided with a plurality of rapidly switchable mirror surfaces (19) located besides one another or above one another, which, when they are switched to be reflective, deflect (21) the projection and direct it out of the spectacle glass onto the eye.

4. Augmented reality (AR) spectacles according to claim 1, **characterized in that** for the point variant, entire micro-optical systems (10) are hidden in the camouflage channels, which additionally integrate IC switching logics, and/or MEMS micro-mechanics or DMD mirror fields and/or 3D-printed gradient micro-optics (70, 15).

5. Augmented reality (AR) spectacles according to any one of the preceding claims, **characterized in that** projection points of the integral image are positioned in at least two grid planes (47, 46) in parallel, wherein different exit optics, different exit angles and thereby different resolutions are provided for each plane.

6. Augmented reality (AR) spectacles according to any one of the preceding claims, **characterized in that** the overlaps of the individual projections arranged besides one another and above one another can be trimmed in a resolution-efficient manner matching each other (51) by choosing the distances of the integral projection points from one another (11) in relation to an optimum or minimum pupil size of the spectacle wearer (58), and/or **in that** the exit optics of the projection points are formed in such a way, that the projection generates an effective useful square shape, and **in that** at least one eye camera (53) is provided, which measures the size of the pupils.

7. Augmented reality (AR) spectacles according to any one of the preceding claims, **characterized in that** the SLM (24) is mounted outside the facial field in a hologram projector (3) that is positioned at the back of the head, and **in that** the SLM (24) is illuminated by at least one light source (22), and **in that** a light front generated by the SLM (24) is incident onto a further SLM surface (76) or directly onto a coupling-in optics (26), and **in that** at least one optical fiber with a preceding coupling-in optics is placed in a coupling-in field (28), and **in that** the fiber is guided through the eyeglass side arm (9) or on another path to the spectacle glass, where the projection exit point, which may have further optics, or light guide extensions with optical switches and micro-optics, or whole chip systems with IC logic (10) and MEMS elements in the form of switches and micro-optics, is positioned in at least one point (18).

8. Augmented reality (AR) spectacles according to any one of the preceding claims, **characterized by** DMD chip SLM optimized for AR optical fiber projection for the utilization of multiple or complex light sources, which can tilt or adjust a plurality of micro-mirrors on the DMD chip in additional directions and positions respectively, and/or has various additional mirror or diffraction structures on the individual mirrors, in order to use different light sources from different directions for the projection.

9. Augmented reality (AR) spectacles according to any one of the preceding claims, **characterized by** a FLCOS (ferroelectric liquid crystal on silicon) SLM optimized for AR optical fiber projection with mirrors located thereon, which comprise a plurality of independently adjustable **FLCD** (ferroelectric liquid crystal display) layers in order to independently set grey values and phase shifts.

10. Augmented reality (AR) spectacles according to any one of the preceding claims, **characterized by** optical fibers for the transmission of light and/or vibrating piezo-electrically moved mirrors or diffusers for reducing the coherence of the light source.

11. Augmented reality (AR) spectacles according to any one of the claims 7 to 10, **characterized by** coupling-in field (28) having a plurality of coupling-in optics as the first stage, that is used like an optical fiber multi-switch, wherein the in the holographic projector (3) the holograms themselves control the respective coupling-in optic, whereas the optical fibers that are not in use can be closed by preceding FLCD diaphragms (27) or other diaphragms.

12. Augmented reality (AR) spectacles according to claim 11, **characterized in that** behind the coupling-in field (28) active optical fiber single switches or successively switching switch systems enable the control of the projection points (10), which are switched by MEMS elements, or by means of DMD mirrors or electrochromic mirror or piezo actuators.

13. Augmented reality (AR) spectacles according to any one of the preceding claims, **characterized in that** a gradient index fiber enlargement or constriction is mounted on the optical fiber ends for the entry and exit of the wave fronts, which makes it possible to generate a higher resolution or better point light sources.

14. Method for mixing virtual images in augmented reality (AR) spectacles into an image visible for a wearer of the spectacles through at least one spectacle glass, wherein by a plurality of optical fiber projectors (59, 18) made of multimode optical fibers (42) a virtual image having a large depth of field is projected into at least one eye of the spectacle wearer, wherein the virtual image is an integral image of a grid of individual projections (48) arranged besides one another and above one another, generated by the optical fiber projectors (59, 18) which, when viewed from close proximity for the spectacle wearer merge into an overall projection, wherein each of the individual projections (48) is a section (37) of the virtual image,
wherein for a computer-controlled spatial light modulator (SLM) (24) or another imaging system that is mounted at an entry end of each optical fiber (42) a complex pixel pattern is calculated by a computer, which is determined by the transformation of the original image through a transmission matrix (36) of the optical fiber, wherein a wave front supplied by the spatial light modulator (SLM) (24) as a hologram or as a complex projection with amplitudes and relative phase shifts (39) is coupled into (41) the optical fiber (42) by means of an optics (40), and
wherein in a point variant, for generating the individual projections, a large number of multimode optical fibers (42) is routed around the spectacle rim and is distributed to a grid of projection points arranged directly next to one another and above one another in the spectacle glass through camouflage tubes, wherein the optical fibers have an optical system at their end and thus the optical fibers form projectors and thus in combination with the properties of the camouflage tubes, the wave front coupled into the individual multimode optical fiber (42)is emitted in the direction of the pupil in a projection cone as a light signal,
or wherein in a line variant, a plurality of multimode optical fibers (17) having respective optical fiber projector ends (18) are directed to the spectacle rim for generating the individual projections (48) and the individual wave front coupled into the multimode optical fiber (17) exits the respective optical fiber projector end (18) as a light signal and propagates in the spectacle glass, until the light signal is directed onto the eye from the spectacle glass through one of the fast-switching mirror surfaces, which are switched to be reflective, from the spectacle glass into the eye.

15. Method for mixing virtual images according to claim 14, **characterized in that** in a first calibration process (87) for all of the routed multi-mode optical fibers (92) the light-scrambling property (96) of the fiber is measured separately for all color components and all possible transmission paths (102) and from that, mathematical transformation matrices (98) are statistically calculated, or the measurements are stored in other data forms and are further optimized for optimum use, **in that** in the normal projection process, the images or diffraction patterns required for an SLM are assembled and calculated by a computer from the image to be displayed itself and from the stored transformation matrix or from the other stored and optimized transformation information (84), **in that** the wave front (39) originating therefrom is generated by an SLM in a fast sequence in a time domain in the different color components and for the required projection points and is coupled into the respective optical fiber, and **in that** possibly further switches (10) or mirror surfaces (19) at the spectacle glass are set accordingly in order to direct the light to the desired exit points.

16. Method for mixing virtual images according to any one of claims 14 to 15, **characterized in that** for the point variant, the optical fiber projectors (42) or adjoining extending light channels or optical systems are routed (64) through the camouflage channels in the spectacle glass directly to an optimum position for the integral image grid, wherein a gradient optics deflects (66) light passing through the spectacle glass around the channels and makes the channels invisible from the outside, wherein the gradient of the refractive index of the optical medium (69) is constructed from a low index in the interior to a higher index towards the outside, up to the index of the surrounding glass, in layers or without transition.

17. Method for mixing virtual images according to any one of claims 14 to 16, **characterized in that** projection points of the integral image in at least two grid planes (47, 46) are controlled in parallel (74, 75), **in that** an area focused by the spectacle wearer is captured by an eye camera (53), and **in that** it is determined which high-resolution projection points and which low-resolution projection points have to be addressed, wherein different resolutions and color depths can be rendered for each plane.

18. Method for mixing virtual images according to any one of claims 14 to 17, **characterized in that** the overlaps of the individual integral-image projections are trimmed to match each other (51) by determining the pupil size and/or the ambient light intensity by means of the eye camera and sensors and are incorporated into the calculation of the clipping frames, and **in that** during the image rendering the protruding image areas are rendered in a hard manner, or not at all with a soft transition.

19. Method for mixing virtual images according to any one of claims 14 to 18, **characterized in that** the generation of the images is primarily realized by holographic methods, that is to say by means of computer-calculated complex diffraction patterns, which are displayed on the SLM, illuminated with laser light or other light and thus generate a complex wave front, which adjust both amplitudes and phase shift, wherein by illuminating the SLM with multiple light sources or more complex light fronts and by the use of optimized SLM constructions, the quality and grey scale depth of the holograms for the optical fiber projector can be enhanced.

20. Method for mixing virtual images according to any one of claims 14 to 19, **characterized in that** the generated images are implemented primarily by means of simple pixel graphics, that is to say by direct transmission of the calculated complex amplitude and phase pattern, however by using optimized SLM constructions and more complex illuminations, with which then likewise amplitude and phase shift-differentiating projections are generated.

21. Method for mixing virtual images according to any one of claims 14 to 20, **characterized in that** when using an optical fiber projector optimized DMD SLM, together with a respective multiple or complex light source suitable for this purpose, the calculated SLM pattern assembles an optimized mixture of the given light sources, in order to generate an optimum amplitude and phase shift pattern at the coupling-in point.

22. Method for mixing virtual images according to any one of claims 14 to 21, **characterized in that** for a low-resolution optical fiber projection 3 SLM cycles for the 3 color components are sufficient, since the grey values per cycle are determined by the hologram, the multiple light sources, or by the transit pattern (96) per pixel, as a result of which it is possible with a fast SLM to handle the large number of ambient projections.

## Revendications

1. Lunettes à réalité augmentée (RA) destinées à mélanger des images virtuelles dans une image visible pour un porteur des lunettes par au moins un verre de lunettes, comprenant une multitude de projecteurs en fibre de verre (59, 18) composés de fibres de verre multimodes (42, 17), qui projettent une image virtuelle avec une grande profondeur de champ dans au moins un œil du porteur de lunettes, dans lesquelles l'image virtuelle est une image intégrale composée d'une trame de projections individuelles (48) disposées côte à côte et les unes au-dessus des autres, générées par les projecteurs en fibre de verre (59, 18), qui se fondent en une projection globale lors d'une observation à proximité pour le porteur de lunettes, dans lesquelles chacune des projections individuelles (48) est un extrait (37) de l'image virtuelle, dans lesquelles un modulateur de lumière spatiale (SLM) (24) commandé par ordinateur ou une autre système d'imagerie est installé sur une extrémité d'entrée de chaque fibre de verre (42, 17), pour lequel un calculateur calcule un motif de pixels complexe, qui est défini par le façonnage de l'image d'origine par une matrice de transmission (36) de la fibre de verre (42, 17), dans lesquelles une optique injecte (41) dans la fibre de verre (42) un front d'onde fourni par le SLM en tant qu'hologramme ou en tant que projection complexe avec des amplitudes et des décalages de phase (39) relatifs, et dans lesquelles dans une variante ponctuelle pour générer les projections individuelles, plusieurs fibres de verre multimodes sont placées autour du bord des lunettes et sont guidées à travers des canaux de camouflage en une trame de points de projection disposés côte à côte et les uns au-dessus des autres directement dans le verre des lunettes, dans lesquelles les fibres de verre (42) présentent sur l'extrémité une optique et ainsi les fibres de verre forment des projecteurs et émettent, ainsi, en combinaison avec les propriétés des canaux de camouflage, le front d'onde injecté dans la fibre de verre multimode individuelle en tant que signal lumineux dans un cône de projection en direction de la pupille,
ou dans lesquelles dans une variante en pointillés pour générer les projections individuelles (48), plusieurs fibres de verre multimodes (17) avec des extrémités de projecteur à fibre de verre (18) respectives sont guidées vers le bord des lunettes et le front d'onde individuel injecté dans la fibre de verre multimode (17) sort en tant que signal lumineux de l'extrémité de projecteur de fibre de verre (18) respective et se propage dans le verre des lunettes jusqu'à ce que le signal lumineux soit dirigé depuis le verre de lunettes sur l'œil par une des surfaces spéculaires (19) rapidement commutables commutées en mode réfléchissant.

2. Lunettes à réalité augmentée (RA) selon la revendication 1, **caractérisées en ce que** pour la variante ponctuelle, les projecteurs en fibre de verre (59) ou des systèmes micro-optiques de prolongement s'y raccordant sont posés (64) directement par rapport à une position optimale pour la trame d'image intégrale dans le verre des lunettes à travers les canaux de camouflage, dans lesquelles une optique à gradient dévie la lumière traversant le verre des lunettes autour des canaux (66) et rend les canaux invisibles depuis l'extérieur, dans lesquelles le gradient de l'indice de réfraction d'un support optique de l'optique à gradient diminue (69) en direction des canaux de l'indice élevé environnant à un indice plus bas.

3. Lunettes à réalité augmentée (RA) selon la revendication 1, **caractérisées en ce que** pour la variante en pointillés, une pluralité de projecteurs en fibre de verre (18) est positionnée tout autour d'un bord d'un verre de lunettes et est dirigée, de là, dans le verre des lunettes, et que le verre des lunettes est pourvu de plusieurs surfaces spéculaires (19) commutables rapidement, situées les unes sur les autres ou côte à côte, qui, lorsqu'elles sont commutées en mode réfléchissant, dévient (21) la projection et la dirigent sur l'œil depuis le verre des lunettes.

4. Lunettes à réalité augmentée (RA) selon la revendication 1, **caractérisées en ce que** pour la variante ponctuelle, des systèmes de micro-optique (10) entiers sont dissimulés dans les canaux de camouflage, qui intègrent (70, 15) en supplément une logique de commutation IC et/ou des équipements micromécaniques MEMS ou des ressorts spéculaires DMD et/ou des micro-optiques à gradient imprimés en 3D.

5. Lunettes à réalité augmentée (RA) selon l'une quelconque des revendications précédentes, **caractérisées en ce que** des points de projection de l'image intégrale sont positionnés parallèlement dans au moins deux plans de trame (47, 46), dans lesquelles différentes optiques de sortie, différents angles de sortie et ainsi différentes résolutions sont prévus pour chaque plan.

6. Lunettes à réalité augmentée (RA) selon l'une quelconque des revendications précédentes, **caractérisées en ce que** les chevauchements des projections individuelles disposées côte à côte et les unes sur les autres peuvent être découpés (51) de manière adaptée les uns par rapport aux autres avec une efficacité de résolution **en ce que** les distances entre les points de projection intégraux les uns par rapport aux autres (11) sont choisies (58) en rapport avec une taille de pupille optimale ou minimale du porteur des lunettes et/ou **en ce que** l'optique de sortie des points de projection est formée de telle sorte que la projection génère une forme carrée utilisable effective, et qu'au moins une caméra pour œil (53) est installée, laquelle mesure la taille des pupilles.

7. Lunettes à réalité augmentée (RA) selon l'une quelconque des revendications précédentes, **caractérisées en ce que** le SLM (24) est installé à l'extérieur du champ de vision dans un projecteur d'hologramme (3) placé sur l'occiput, et que le SLM (24) est éclairé par au moins une source de lumière (22), et qu'un front de lumière généré par le SLM (24) est incident sur une autre surface de SLM (76) ou directement sur une optique d'injection (26), et qu'au moins une fibre de verre avec une optique d'injection placée//branchée en amont est placée dans un champ d'injection (28), et que la fibre mène à travers la branche des lunettes (9) ou sur un autre chemin au verre des lunettes, où est positionné sur au moins un emplacement le point de sortie de projection, qui peut présenter d'autres optiques, ou des prolongements de guides de lumière avec des aiguillages optiques et des micro-optiques, ou des systèmes de puce entiers avec une logique IC (10) et des éléments MEMS en tant qu'aiguillages et que micro-optiques.

8. Lunettes à réalité augmentée (RA) selon l'une quelconque des revendications précédentes, **caractérisées par** un SLM à puce DMD optimisé pour la projection de fibre de verre de RA pour utiliser des sources de lumière multiples ou complexes, qui peut incliner ou régler une multitude de micromiroirs sur la puce DMD respectivement dans des directions et des positions supplémentaires, et/ou présente différentes structures réfléchissantes ou de diffraction supplémentaires sur les divers miroirs pour utiliser différentes sources de lumière provenant de directions différentes pour la projection.

9. Lunettes à réalité augmentée (RA) selon l'une quelconque des revendications précédentes, **caractérisées par** un SLM à FLCOS (à cristaux liquides ferroélectriques sur silicone) optimisé pour la projection de fibre de verre RA avec des miroirs se trouvant dessus, qui présentent plusieurs couches FLCD (d'affichage à cristaux liquides ferroélectriques) réglables indépendamment pour régler indépendamment des valeurs de gris et des décalages de phase.

10. Lunettes à réalité augmentée (RA) selon l'une quelconque des revendications précédentes, **caractérisées par** des fibres de verre pour le passage de la lumière et/ou des miroirs déplacés de manière piézoélectrique vibrants ou des diffuseurs de réduction de la cohérence de la source de lumière.

11. Lunettes à réalité augmentée (RA) selon l'une quelconque des revendications 7 à 10, **caractérisées par** un champ d'injection (28) avec plusieurs optiques d'injection en tant que première étape, qui est utilisé comme un aiguillage multiple en fibre de verre, dans lesquelles les hologrammes pilotent eux-mêmes dans le projecteur d'hologramme (3) l'optique d'injection respective, tandis que les fibres de verre non usagées sont fermées par des diaphragmes FLCD (27) montés en amont ou d'autres diaphragmes.

12. Lunettes à réalité augmentée (RA) selon la revendication 11, **caractérisées en ce que** des aiguillages individuels en fibre de verre actifs après le champ d'injection (28) ou des systèmes d'aiguillage de branchement les uns derrière les autres permettent (10) le pilotage des points de projection, dans lesquelles ceux-ci sont commutés par des éléments MEMS ou sont commutés par des miroirs DMD ou des actionneurs spéculaires ou piézoélectriques électrochromiques.

13. Lunettes à réalité augmentée (RA) selon l'une quelconque des revendications précédentes, **caractérisées en ce qu'**un élargissement de fibre à gradient d'indice ou un rétrécissement est installé sur les extrémités de fibre optique pour faire entrer et sortie les fronts d'onde, qui permet de générer une résolution plus élevée ou des sources de lumière ponctuelles améliorées.

14. Procédé de mélange d'images virtuelles dans des lunettes à réalité augmentée (RA) dans une image visible pour un porteur des lunettes par au moins un verre de lunettes, dans lequel une image virtuelle avec une grande profondeur de champ est projetée dans au moins un œil du porteur de lunettes par une multitude de projecteurs en fibre de verre (59, 18) composés de fibres de verre multimodes (42),
dans lequel l'image virtuelle est une image intégrale composée d'une trame de projections individuelles (48) disposées côte à côte et les unes au-dessus des autres, générées par les projecteurs en fibre de verre (59, 18), qui se fondent en une projection globale lors d'une observation à proximité pour le porteur de lunettes, dans lequel chacune des projections individuelles (48) est un extrait (37) de l'image virtuelle, est calculé pour un modulateur de lumière spatiale (SLM) (24) commandé par ordinateur installé sur une extrémité d'entrée de chaque fibre de verre (42) ou une autre système d'imagerie par un calculateur un motif de pixels complexe, qui est défini par le façonnage de l'image d'origine par une matrice de transmission (36) de la fibre de verre, un front d'onde fourni par le SLM (24) en tant qu'hologramme ou en tant que projection complexe avec des amplitudes et des décalages de phase (39) relatifs est injecté (41) par une optique (40) dans la fibre de verre (42), et
dans lequel dans une variante ponctuelle pour générer les projections individuelles, plusieurs fibres de verre multimodes (42) sont placées autour du bord des lunettes et sont guidées à travers des canaux de camouflage en une trame de points de projection disposés côte à côte et les uns au-dessus des autres directement dans le verre des lunettes, dans lequel les fibres de verre (42) présentent sur l'extrémité une optique et ainsi les fibres de verre forment des projecteurs et émettent, ainsi, en combinaison avec les propriétés des canaux de camouflage, le front d'onde injecté dans la fibre de verre multimode (42) individuelle en tant que signal lumineux dans un cône de projection en direction de la pupille,
ou dans lequel dans une variante en pointillés pour générer les projections individuelles (48), plusieurs fibres de verre multimodes (17) avec des extrémités de projecteur en fibre de verre (18) respectives sont guidées vers le bord des lunettes et le front d'onde individuel injecté dans la fibre de verre multimode (17) sort en tant que signal lumineux de l'extrémité de projecteur de fibre de verre (18) respective et se propage dans le verre des lunettes jusqu'à ce que le signal lumineux soit dirigé depuis le verre de lunettes sur l'œil par une des surfaces spéculaires (19) rapidement commutables commutées en mode réfléchissant.

15. Procédé pour mélanger des images virtuelles selon la revendication 14,
**caractérisé en ce que** dans un premier processus de calibrage (87) pour toutes les fibres de verre multimodes (92) posées, la propriété de mélange de lumière (96) de la fibre est mesurée séparément pour toutes les composantes de couleur et tous les chemins de passage (102) possibles et, sur cette base, des matrices de transformation (98) mathématiques sont calculées statistiquement, ou les mesures sont mémorisées sous d'autres formes de données et sont optimisées ultérieurement pour l'utilisation optimale, que dans le processus de projection normal, les images ou motifs de diffraction requis pour un SLM sont calculés par un calculateur à partir de l'image à reproduire et se composent de la matrice de transformation mémorisée ou des autres informations de transformation (84) mémorisées et optimisées, que le front d'onde (39) en résultant est généré respectivement en une séquence rapide dans le temps l'une après l'autre dans les différentes composantes de couleur et pour les points de projection requis et est injecté dans la fibre de verre respective par un SLM, et qu'éventuellement d'autres aiguillages (10) ou surfaces spéculaires (19) sont réglés de manière correspondante sur le verre de lunettes pour diriger la lumière vers les points de sortie souhaités.

16. Procédé de mélange d'images virtuelles selon l'une quelconque des revendications 14 à 15, **caractérisé en ce que** pour la variante ponctuelle, les projecteurs en fibre de verre (42) ou des canaux de lumière de prolongement s'y raccordant ou des systèmes optiques sont posés (64) directement par rapport à une position optimale pour la trame d'image intégrale dans le verre de lunettes à travers les canaux de camouflage, dans lequel une optique à gradient dévie (66) la lumière traversant le verre des lunettes autour des canaux et rend les canaux invisibles depuis l'extérieur, dans lequel le gradient de l'indice de réfraction du support optique (69) est élaboré depuis un indice bas à l'intérieur vers un indice plus élevé vers l'extérieur jusqu'à l'indice du verre entourant en couches ou sans transition.

17. Procédé de mélange d'images virtuelles selon l'une des revendications 14 à 16, **caractérisé en ce que** des points de projection de l'image intégrale sont pilotés (74, 75) parallèlement dans au moins deux plans de trame (47, 46), qu'une zone de focalisation du porteur des lunettes est enregistrée par une caméra pour œil (53) et que sont fixés les points de projection à résolution élevée et les points de projection à basse résolution, qui doivent être abordés, dans lequel différentes résolutions et profondeurs de couleur peuvent être rendues pour chaque plan.

18. Procédé de mélange d'images virtuelles selon l'une quelconque des revendications 14 à 17, **caractérisé en ce que** les chevauchements des diverses projections d'image intégrale sont coupés (51) de manière adaptée les uns par rapport aux autres **en ce que** la taille des pupilles et/ou l'intensité de lumière environnante sont déterminées par la caméra pour œil et des capteurs et sont intégrées dans le calcul du cadre d'écrêtage, et que les zones d'image de débordement sont difficilement rendues ou avec une transition douce, ou ne sont pas du tout rendues pendant le rendu d'image.

19. Procédé de mélange d'images virtuelles selon l'une quelconque des revendications 14 à 18, **caractérisé en ce que** la génération des images est réalisée principalement par des procédés holographiques, donc par des motifs de diffraction complexes calculés par ordinateur, qui sont reproduits sur le SLM avec une lumière laser ou une autre lumière et génèrent ainsi un front d'onde complexe, qui règlent à la fois des amplitudes et des décalages de phase et, dans lequel du fait de l'éclairage du SLM avec des sources de lumière multiples ou des fronts de lumière plus complexes et du fait de l'utilisation de structures optimisées de SLM, la qualité et la profondeur des niveaux de gris des hologrammes pour le projecteur en fibre de verre peuvent être améliorées.

20. Procédé de mélange d'images virtuelles selon l'une quelconque des revendications 14 à 19, **caractérisé en ce que** les images générées sont principalement réalisées par un graphique en pixels simple, donc par transmission directe du motif d'amplitude et de phase complexe calculé, en utilisant toutefois des structures de SLM optimisées et des éclairages plus complexes, avec lesquels des projections de différenciation d'amplitudes et de décalages de phase sont alors également générées.

21. Procédé de mélange d'images virtuelles selon l'une quelconque des revendications 14 à 20, **caractérisé en ce que** lors de l'utilisation d'un SLM DMD optimisé à projecteurs en fibre de verre conjointement avec une source de lumière multiple ou complexe adaptée, le motif de SLM calculé compose un mélange optimisé à partir des sources de lumière données pour générer un motif d'amplitude et de décalage de phase optimal sur le point d'injection.

22. Procédé de mélange d'images virtuelles selon l'une quelconque des revendications 14 à 21, **caractérisé en ce que** pour une projection de fibre de verre à basse résolution, 3 cycles de SLM suffisent pour les 3 composantes de couleur dans la mesure où les valeurs de gris sont générées par cycle par l'hologramme, les multiples sources de lumière ou par le motif de passage (96) par pixel, ce qui permet avec un SLM rapide de surmonter le nombre important de projections d'ambiance.
